# EUROPEAN PATENT APPLICATION

(11) **EP 4 622 308 A1**
(43) Date of publication of application: **24.09.2025**
(21) Application number: 23902578.6
(22) Date of filing: 07.12.2023
(51) Int. Cl.: H04W 4/24

(54) **CHARGING METHOD AND APPARATUS**

(30) Priority: 16.12.2022 CN 202211627897
(71) Applicant: Huawei Technologies Co., Ltd., Shenzhen, Guangdong 518129 (CN)
(72) Inventor: CHAI, Xiaoqian, Shenzhen, Guangdong 518129 (CN)
(74) Representative: Isarpatent
(86) International application number: PCT/CN2023/137058
(87) International publication number: WO 2024/125382

(57) **Abstract**

This application provides a charging method, an apparatus, and a system, and is applied to the field of converged charging. The method includes: After receiving a charging request message from a charging trigger function network element, a charging function network element charges a terminal device based on charging data of the terminal device, where the charging request message is for requesting to charge the terminal device, the charging data is received by the charging function network element from a dedicated charging function network element, and the dedicated charging function network element is a charging system that persistently stores user data of the terminal device. According to the foregoing solution, cross-area transmission of a large amount of charging information generated in a charging process can be reduced, to reduce signaling network load and improve cyber resilience.

## Description

This application claims priority to Chinese Patent Application No. 202211627897.1, filed with the China National Intellectual Property Administration on December 16, 2022 and entitled "CHARGING METHOD AND APPARATUS", which is incorporated herein by reference in its entirety.

### TECHNICAL FIELD

This application relates to the field of communication technologies, and in particular, to a charging method and an apparatus.

### BACKGROUND

The 3rd generation partnership project (3rd generation partnership project, 3GPP) introduces a converged charging architecture in a 5th generation (5th generation, 5G) network. To be specific, a core network communicates with a converged charging system through a unified interface. The charging system selects an online charging mode and/or an offline charging mode based on a user requirement and a service requirement. For example, the offline charging mode is used for traffic generated by using a 5G low-delay slice by a user, and the online charging mode is used for other traffic.

In a scenario in which the user is charged by using the converged charging architecture, a home charging function (home charging function, H-CHF) network element of the user needs to perform charging processing on the user. However, if a location of the user is changed, charging information of a terminal device may need to be frequently transmitted to the H-CHF across areas. Therefore, a large quantity of network resources need to be consumed, and a requirement on network reliability is high. Consequently, operation costs are greatly increased.

Therefore, how to perform charging processing on the user to save a network resource is a problem that needs to be considered currently.

### SUMMARY

This application provides a charging method and an apparatus, to save a network resource and reduce operation costs.

According to a first aspect, a charging method is provided. The method may be performed by a charging function network element, or may be performed by a component (for example, a chip or a circuit) of the charging function network element. For ease of description, an example in which the charging function network element performs the method is used for description herein.

The charging method includes: The charging function network element receives a charging request message from a charging trigger function network element, where the charging request message is for requesting to charge a terminal device. The charging function network element performs charging processing on the terminal device based on charging data of the terminal device, where the charging data is received by the charging function network element from a dedicated charging function network element, and the dedicated charging function network element is a charging system that persistently stores user data of the terminal device.

Based on the foregoing solution, after receiving the charging request message from the charging trigger function network element, the charging function network element performs charging processing on the terminal device based on the charging data obtained from the dedicated charging function network element. According to the foregoing solution, cross-area transmission of a large amount of charging information generated in a charging process can be reduced, to save a network resource and reduce operation costs.

For example, when a network is divided into a plurality of areas (for example, the network is deployed based on provinces in China, one network crosses a plurality of countries in Europe, and an operator network covers a plurality of islands in a coastal country), a plurality of core networks and charging systems need to be deployed in the plurality of areas. If a home charging system is used to charge the terminal device, when the terminal device moves to an area outside a home area, a large amount of charging information (for example, information such as a call detail record) generated by the terminal device in real time needs to be routed to a dedicated charging system of the terminal device. Transmission of the charging information increases signaling network load and the operation costs, and wastes a large quantity of network resources. However, in the foregoing solution, the charging function network element (namely, the charging function network element that receives the charging request message) nearest to the terminal device is used to charge the terminal device, so that the network resource can be saved, and impact that is on user service use and that is caused when a charging network line is faulty can be reduced.

With reference to the first aspect, in some implementations of the first aspect, before the charging function network element performs charging processing on the terminal device based on the charging data of the terminal device, the method further includes: The charging function network element sends a charging data request message to the dedicated charging function network element. The charging function network element receives the charging data from the dedicated charging function network element.

Based on the foregoing solution, the charging function may request the charging data of the terminal device from the dedicated charging function network element, to perform charging processing on the terminal device. In other words, in the foregoing solution, the dedicated charging function network element of the terminal device is used to maintain the charging data of the terminal device, so that the charging data of the terminal device can be maintained and updated more conveniently. When a serving charging function network element of the terminal device is switched, the serving charging function network element of the terminal device may only need to directly obtain the charging data for charging from the dedicated charging function network element, and does not need to enable all user data to migrate, to save the network resource.

With reference to the first aspect, in some implementations of the first aspect, that the charging function network element sends a charging data request message to the dedicated charging function network element includes: The charging function network element sends the charging data request message to the dedicated charging function network element when determining that there is no charging data in local storage.

Based on the foregoing solution, before requesting to obtain the charging data from the dedicated charging function network element, the charging function network element may first determine whether there is charging data of the terminal device in the local storage, and send the charging data request message to the dedicated charging function network element only if there is no charging data of the terminal device in the local storage, to save the network resource in some cases.

With reference to the first aspect, in some implementations of the first aspect, the method further includes: The charging function network element sends a query request message to a network repository function network element, where the query request message includes an identifier of the terminal device, and the query request message is for requesting to query for the dedicated charging function network element corresponding to the terminal device. The charging function network element receives address information of the dedicated charging function network element from the network repository function network element. That the charging function network element sends a charging data request message to the dedicated charging function network element includes: The charging function network element sends the charging data request message to the dedicated charging function network element based on the address information.

Based on the foregoing solution, the charging function network element may query the network repository function network element for the address information of the dedicated charging function network element, so that the charging function network element can obtain the charging data of the terminal device from the dedicated charging function network element, thereby performing charging processing on the terminal device based on the charging data of the terminal device. This avoids cross-area transmission, to a visited charging function network element, of the large amount of charging data generated in the charging process, to save the network resource and reduce the operation costs.

With reference to the first aspect, in some implementations of the first aspect, the method further includes: The charging function network element obtains the address information of the dedicated charging function network element from the charging request message. That the charging function network element sends a charging data request message to the dedicated charging function network element includes: The charging function network element sends the charging data request message to the dedicated charging function network element based on the address information.

Based on the foregoing solution, the charging trigger function network element may further include the address information of the dedicated charging function network element in the charging request message. In this case, the charging function network element may directly obtain the address information of the dedicated charging function network element from the charging request message. Therefore, when determining to obtain the user data of the terminal device from the dedicated charging function network element, the charging function network element may directly send the charging request message to the dedicated charging function network element, so that a delay can be reduced.

With reference to the first aspect, in some implementations of the first aspect, that the charging function network element obtains the charging data of the terminal device includes: The charging function network element obtains the charging data of the terminal device from local storage.

Based on the foregoing solution, if the charging function network element locally stores the charging data of the terminal device, for example, the charging function network element obtains the charging data of the terminal device from the dedicated charging function network element in advance, the charging function network element may directly obtain the charging data of the terminal device from the local storage, and does not need to obtain the charging data from the dedicated charging function network element, so that the network resource can be saved.

With reference to the first aspect, in some implementations of the first aspect, after the charging function network element performs charging processing on the terminal device based on the charging data of the terminal device, the method further includes: The charging function network element sends a charging result to the dedicated charging function network element, where the charging result is data obtained by performing charging processing on the terminal device by the charging function network element.

Based on the foregoing solution, after performing charging processing on the terminal device, the charging function network element may send the charging result to the dedicated charging function network element, so that the dedicated charging function network element can update the locally maintained charging data of the terminal device, to avoid a problem caused by no update of the charging data. For example, because the charging data is not updated, traffic allocated by the dedicated charging function network element to the serving charging function network element of the terminal device is greater than remaining traffic of a package of a user.

According to a second aspect, a charging method is provided. The method may be performed by a dedicated charging function network element, or may be performed by a component (for example, a chip or a circuit) of the dedicated charging function network element. For ease of description, an example in which the dedicated charging function network element performs the method is used for description herein.

The charging method includes: The dedicated charging function network element receives a charging data request message from a charging function network element, where the charging data request message is for requesting to obtain charging data of a terminal device, and the dedicated charging function network element is a charging system that persistently stores user data of the terminal device. The dedicated charging function network element sends the charging data to the charging function network element in response to the charging data request message, where the charging data is for performing charging processing on the terminal device.

Based on the foregoing solution, the dedicated charging function network element may send, to the charging function network element, the charging data for performing charging processing on the terminal device, so that the charging function network element can directly perform charging processing on the terminal device. In this way, cross-area transmission of a large amount of charging information generated in a charging process can be reduced, to save a network resource and reduce operation costs.

With reference to the second aspect, in some implementations of the second aspect, after the dedicated charging function network element sends the charging data of the terminal device to the charging function network element, the method further includes: The dedicated charging function network element receives a first charging result from another charging function network element, where the first charging result is data obtained by performing charging processing on the terminal device by the another charging function network element, and the another charging function network element is a network element that provides a charging service for the terminal device before the charging function network element. The dedicated charging function network element determines, based on the first charging result, whether the charging data of the terminal device needs to be updated to the charging function network element. When the charging data of the terminal device needs to be updated to the charging function network element, the dedicated charging function network element sends updated charging data to the charging function network element.

Based on the foregoing solution, if the dedicated charging function network element receives the first charging result from the another charging function network element after sending the charging data of the terminal device to the charging function network element, the dedicated charging function network element may determine whether the charging data needs to be updated to the charging function network element. For example, the dedicated charging function network element updates the user data of the terminal device based on the first charging result. If updated user data shows that a package allowance of a user is less than traffic allocated by the dedicated charging function network element to the charging function network element by using the charging data, the dedicated charging function network element determines that the charging data of the terminal device needs to be updated to the charging function network element. In this case, the dedicated charging function network element sends the updated charging data to the charging function network element, to avoid a problem caused by no update of the charging data. For example, because the charging data is not updated, traffic used by the user exceeds traffic in a package.

With reference to the second aspect, in some implementations of the second aspect, the method further includes: The dedicated charging function network element records that the charging function network element is a network element that currently provides the charging service for the terminal device.

Based on the foregoing solution, the dedicated charging function network element may record that the charging function network element is the network element that currently provides the charging service for the terminal device. In other words, the dedicated charging function network element stores information about a current serving charging function network element of the terminal device (namely, information about the charging function network element). In this way, the dedicated charging function network element can determine the current serving charging function network element of the terminal device, so that the dedicated charging function network element can subsequently interact with the serving charging function network element of the terminal device to serve the terminal device.

With reference to the second aspect, in some implementations of the second aspect, the method further includes: The dedicated charging function network element receives a query request message, where the query request message includes an identifier of the terminal device, and the query request message is for requesting to query for the network element that currently provides the charging service for the terminal device. The dedicated charging function network element returns address information of the dedicated charging function network element of the terminal device based on the recording.

Based on the foregoing solution, another network element may query, via the dedicated charging function network element, for the network element that currently provides the charging service for the terminal device, to provide a corresponding service for the terminal device via the charging function network element.

With reference to the second aspect, in some implementations of the second aspect, the method further includes: The dedicated charging function network element receives a charging result from the charging function network element, where the charging result is data obtained by performing charging processing on the terminal device by the charging function network element. The dedicated charging function network element updates the charging data based on the charging result.

Based on the foregoing solution, after performing charging processing on the terminal device, the charging function network element may send the charging result to the dedicated charging function network element, so that the dedicated charging function network element can update the locally maintained charging data of the terminal device, to avoid a problem caused by no update of the charging data. For example, because the charging data is not updated, traffic allocated by the dedicated charging function network element to the serving charging function network element of the terminal device is greater than remaining traffic of a package of the user.

According to a third aspect, a charging method is provided. The method may be performed by a charging trigger function network element, or may be performed by a component (for example, a chip or a circuit) of the charging trigger function network element. For ease of description, an example in which a dedicated charging function network element performs the method is used for description herein.

The method includes: The charging trigger function network element obtains address information of a charging function network element based on information about the charging trigger function network element and/or location information of a terminal device. The charging trigger function network element sends a charging request message to the charging function network element based on the address information, where the charging request message is for requesting the charging function network element to charge the terminal device.

Based on the foregoing solution, the charging trigger function network element requests the charging function network element corresponding to the information about the charging trigger function network element and/or the location information of the terminal device to perform charging processing on the terminal device. That is, the charging trigger function network element triggers a charging function network element nearest to the terminal device to perform charging processing on the terminal device. In this way, cross-area transmission of a large amount of charging data generated in a charging process can be reduced, to save a network resource and reduce operation costs.

With reference to the third aspect, in some implementations of the third aspect, that a charging trigger function network element obtains address information of a charging function network element based on information about the charging trigger function network element and/or location information of a terminal device includes: The charging trigger function network element sends a query request message to a network repository function network element, where the query request message is for requesting to obtain address information of a candidate charging function network element configured to perform charging processing on the terminal device, and the query request message includes the location information of the terminal device and/or the information about the charging trigger function network element. The charging trigger function network element receives the address information of the charging function network element from the repository function network element.

Based on the foregoing solution, the charging trigger function network element may query, via the network repository function network element, for the address information of the charging function network element corresponding to the information about the charging trigger function network element and/or the location information of the terminal device, to trigger the charging function network element to perform charging processing on the terminal device. In this way, the cross-area transmission of the large amount of charging data generated in the charging process can be reduced, to save the network resource and reduce the operation costs.

With reference to the third aspect, in some implementations of the third aspect, that a charging trigger function network element obtains address information of a charging function network element based on information about the charging trigger function network element and/or location information of a terminal device includes: The charging trigger function network element determines, in local configuration information based on the location information of the terminal device and/or the information about the charging trigger function network element, the address information of the charging function network element corresponding to the location information of the terminal device and/or the information about the charging trigger function network element.

Based on the foregoing solution, if the charging trigger function network element is preconfigured with the address information of the charging function network element corresponding to the information about the charging trigger function network element and/or the location information of the terminal device, the charging trigger function network element may directly obtain the address information of the charging function network element from the local configuration information, to trigger the charging function network element to perform charging processing on the terminal device. In this way, the cross-area transmission of the large amount of charging data generated in the charging process can be reduced, to save the network resource and reduce the operation costs.

With reference to the third aspect, in some implementations of the third aspect, the charging request message includes address information of a dedicated charging function network element, and the dedicated charging function network element is a charging system that persistently stores user data of the terminal device.

Based on the foregoing solution, the charging trigger function network element may include the address information of the dedicated charging function network element in the charging request message. In this way, the charging function network element can directly obtain the address information of the dedicated charging function network element from the charging request message, without obtaining the address information of the dedicated charging function network element by using another procedure, so that a delay can be reduced.

According to a fourth aspect, a charging method is provided. The method includes: A charging trigger function network element sends a charging request message to a charging function network element, where the charging request message is for requesting to perform charging processing on a terminal device. The charging function network element receives the charging request message from the charging trigger function network element. The charging function network element performs charging processing on the terminal device based on charging data of the terminal device, where the charging data is received by the charging function network element from a dedicated charging function network element, and the dedicated charging function network element is a charging system that persistently stores user data of the terminal device.

With reference to the fourth aspect, in some implementations of the fourth aspect, before the charging function network element performs charging processing on the terminal device based on the charging data of the terminal device, the method further includes: The charging function network element sends a charging data request message to the dedicated charging function network element. The dedicated charging function network element sends the charging data to the charging function network element in response to the charging data request message. The charging function network element receives the charging data from the dedicated charging function network element.

With reference to the fourth aspect, in some implementations of the fourth aspect, that the charging function network element sends a charging data request message to the dedicated charging function network element includes: The charging function network element sends the charging data request message to the dedicated charging function network element when determining that there is no charging data in local storage.

With reference to the fourth aspect, in some implementations of the fourth aspect, the method further includes: The charging function network element obtains address information of the dedicated charging function network element. That the charging function network element sends a charging data request message to the dedicated charging function network element includes: The charging function network element sends the charging data request message to the dedicated charging function network element based on the address information.

With reference to the fourth aspect, in some implementations of the fourth aspect, that the charging function network element obtains address information of the dedicated charging function network element includes: The charging function network element sends a query request message to a network repository function network element, where the query request message includes an identifier of the terminal device, and the query request message is for requesting to query for the dedicated charging function network element corresponding to the terminal device. The network repository function network element determines the dedicated charging function network element based on the identifier of the terminal device. The network repository function network element sends the address information of the dedicated charging function network element to the charging function network element. The charging function network element receives the address information of the dedicated charging function network element from the network repository function network element.

With reference to the fourth aspect, in some implementations of the fourth aspect, that the charging function network element obtains address information of the dedicated charging function network element includes: The charging function network element obtains the address information of the dedicated charging function network element from the charging request message.

With reference to the fourth aspect, in some implementations of the fourth aspect, that the charging function network element obtains the charging data of the terminal device includes: The charging function network element obtains the charging data of the terminal device from local storage.

With reference to the fourth aspect, in some implementations of the fourth aspect, after the charging function network element performs charging processing on the terminal device based on the charging data of the terminal device, the method further includes: The charging function network element sends a charging result to the dedicated charging function network element, where the charging result is data obtained by performing charging processing on the terminal device by the charging function network element. The dedicated charging function network element receives the charging result from the charging function network element.

With reference to the fourth aspect, in some implementations of the fourth aspect, after the dedicated charging function network element sends the charging data of the terminal device to the charging function network element, the method further includes: The dedicated charging function network element receives a first charging result from another charging function network element, where the first charging result is data obtained by performing charging processing on the terminal device by the another charging function network element, and the another charging function network element is a network element that provides a charging service for the terminal device before the charging function network element. The dedicated charging function network element determines, based on the first charging result, whether the charging data of the terminal device needs to be updated to the charging function network element. When the charging data of the terminal device needs to be updated to the charging function network element, the dedicated charging function network element sends updated charging data to the charging function network element. The charging function network element receives the updated charging data from the dedicated function network element.

With reference to the fourth aspect, in some implementations of the fourth aspect, the method further includes: The dedicated charging function network element records that the charging function network element is a network element that currently provides the charging service for the terminal device.

According to a fifth aspect, a charging apparatus is provided. The charging apparatus includes: a transceiver module, configured to receive a charging request message from a charging trigger function network element, where the charging request message is for requesting to charge a terminal device; and a processing module, configured to perform charging processing on the terminal device based on charging data of the terminal device, where the charging data is received by the charging apparatus from a dedicated charging function network element, and the dedicated charging function network element is a charging system that persistently stores user data of the terminal device.

With reference to the fifth aspect, in some implementations of the fifth aspect, the transceiver module is further configured to send a charging data request message to the dedicated charging function network element; and receive the charging data from the dedicated charging function network element.

With reference to the fifth aspect, in some implementations of the fifth aspect, the processing module is specifically configured to send the charging data request message to the dedicated charging function network element by using the transceiver module when determining that there is no charging data in local storage.

With reference to the fifth aspect, in some implementations of the fifth aspect, the processing module is further configured to obtain address information of the dedicated charging function network element; and the processing module is specifically configured to send the charging data request message to the dedicated charging function network element based on the address information.

With reference to the fifth aspect, in some implementations of the fifth aspect, the transceiver module is specifically configured to: send a query request message to a network repository function network element, where the query request message includes an identifier of the terminal device, and the query request message is for requesting to query for the dedicated charging function network element corresponding to the terminal device; and receive the address information of the dedicated charging function network element from the network repository function network element.

With reference to the fifth aspect, in some implementations of the fifth aspect, the transceiver module is specifically configured to obtain the address information of the dedicated charging function network element from the charging request message.

With reference to the fifth aspect, in some implementations of the fifth aspect, the processing module is specifically configured to obtain the charging data of the terminal device from local storage.

With reference to the fifth aspect, in some implementations of the fifth aspect, the transceiver module is further configured to send a charging result to the dedicated charging function network element, where the charging result is data obtained by performing charging processing on the terminal device by the charging function network element.

According to a sixth aspect, a charging apparatus is provided. The charging apparatus includes: a transceiver module, configured to: receive a charging data request message from a charging function network element, where the charging data request message is for requesting to obtain charging data of a terminal device, and the dedicated charging function network element is a charging system that persistently stores user data of the terminal device; and send the charging data to the charging function network element, where the charging data is for performing charging processing on the terminal device.

With reference to the sixth aspect, in some implementations of the sixth aspect, the transceiver module is further configured to receive a first charging result from another charging function network element, where the first charging result is data obtained by performing charging processing on the terminal device by the another charging function network element, and the another charging function network element is a network element that provides a charging service for the terminal device before the charging function network element. The charging apparatus further includes a processing module, configured to determine, based on the first charging result, whether the charging data of the terminal device needs to be updated to the charging function network element. The processing module is further configured to: when the charging data of the terminal device needs to be updated to the charging function network element, send updated charging data to the charging function network element by using the transceiver module.

With reference to the sixth aspect, in some implementations of the sixth aspect, the processing module is further configured to record that the charging function network element is a network element that currently provides the charging service for the terminal device.

With reference to the sixth aspect, in some implementations of the sixth aspect, the transceiver module is further configured to receive a charging result from the charging function network element, where the charging result is data obtained by performing charging processing on the terminal device by the charging function network element.

According to a seventh aspect, a charging apparatus is provided. The charging apparatus includes: a processing module, configured to obtain address information of a charging function network element based on information about the charging trigger function network element and/or location information of a terminal device; and a transceiver module, configured to send a charging request message to the charging function network element based on the address information, where the charging request message is for requesting the charging function network element to charge the terminal device.

With reference to the seventh aspect, in some implementations of the seventh aspect, the transceiver module is specifically configured to: send a query request message to a network repository function network element, where the query request message is for requesting to obtain address information of a candidate charging function network element configured to perform charging processing on the terminal device, and the query request message includes the location information of the terminal device and/or the information about the charging trigger function network element; and receive the address information of the charging function network element from the repository function network element.

With reference to the seventh aspect, in some implementations of the seventh aspect, the processing module is specifically configured to determine, in local configuration information based on the location information of the terminal device and/or the information about the charging trigger function network element, the address information of the charging function network element corresponding to the location information of the terminal device and/or the information about the charging trigger function network element.

With reference to the seventh aspect, in some implementations of the seventh aspect, the charging request message includes address information of a dedicated charging function network element, and the dedicated charging function network element is a charging system that persistently stores user data of the terminal device.

According to an eighth aspect, a communication apparatus is provided. The apparatus may be a charging function network element, or may be a chip used in the charging function network element. The apparatus has a function of implementing the method implemented in the first aspect. The function may be implemented by using hardware, or may be implemented by the hardware executing corresponding software. The hardware or the software includes one or more modules corresponding to the foregoing function.

According to a ninth aspect, a communication apparatus is provided. The apparatus may be a dedicated charging function network element, or may be a chip used in the dedicated charging function network element. The apparatus has a function of implementing the method implemented in the second aspect. The function may be implemented by using hardware, or may be implemented by the hardware executing corresponding software. The hardware or the software includes one or more modules corresponding to the foregoing function.

According to a tenth aspect, a communication apparatus is provided. The apparatus may be a charging trigger function network element, or may be a chip used in the charging trigger function network element. The apparatus has a function of implementing the method implemented in the third aspect. The function may be implemented by using hardware, or may be implemented by the hardware executing corresponding software. The hardware or the software includes one or more modules corresponding to the foregoing function.

According to an eleventh aspect, a communication apparatus is provided. The apparatus includes: a memory, configured to store a program; and a processor, configured to execute the program stored in the memory. When the program stored in the memory is executed, the processor is configured to perform the method provided in any one of the first aspect to the third aspect.

According to a twelfth aspect, this application provides a processor, configured to perform the methods provided in the foregoing aspects. In a process of performing the methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the foregoing information. After the foregoing information is output by the processor, other processing may further need to be performed on the foregoing information before the foregoing information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information before the foregoing information is input into the processor.

Based on the foregoing principle, for example, receiving the request message in the foregoing methods may be understood as receiving input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform the methods, or a processor, for example, a general-purpose processor, that executes computer instructions in a memory to perform the methods. The memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in this embodiment of this application.

According to a thirteenth aspect, a computer-readable storage medium is provided. The computer-readable medium stores program code to be executed by a device, and the program code is for performing the method provided in any one of the first aspect to the third aspect.

According to a fourteenth aspect, a computer program product including instructions is provided. When the computer program product runs on a computer, the computer is enabled to perform the method provided in any one of the first aspect to the third aspect.

According to a fifteenth aspect, a chip is provided. The chip includes a processor and a communication interface. The processor reads, through the communication interface, instructions stored in a memory, to perform the method provided in any one of the first aspect to the third aspect.

Optionally, in an implementation, the chip may further include the memory. The memory stores the instructions, and the processor is configured to execute the instructions stored in the memory. When the instructions are executed, the processor is configured to perform the method provided in any one of the first aspect to the third aspect.

According to a sixteenth aspect, a communication system is provided. The communication system includes a charging function network element configured to perform the method shown in the first aspect, a dedicated charging function network element configured to perform the method shown in the second aspect, and a charging trigger function network element configured to perform the method shown in the third aspect.

### BRIEF DESCRIPTION OF DRAWINGS

FIG. 1 is a diagram of a charging architecture 100 applicable to an embodiment of this application;
FIG. 2 is a diagram of a network architecture 200 applicable to an embodiment of this application;
(a) in FIG. 3 is a diagram of a system architecture 300(a) applicable to an embodiment of this application;

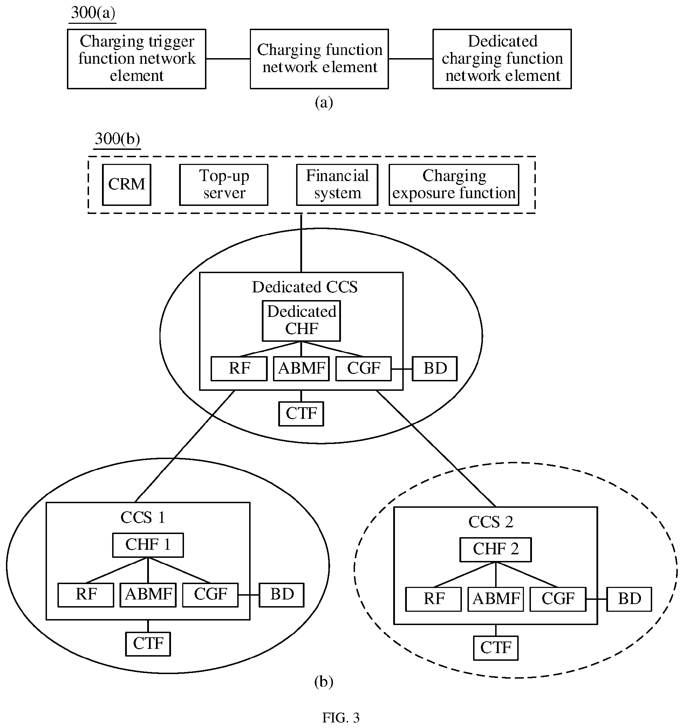

(b) in FIG. 3 is a diagram of a system architecture 300(b) applicable to an embodiment of this application;

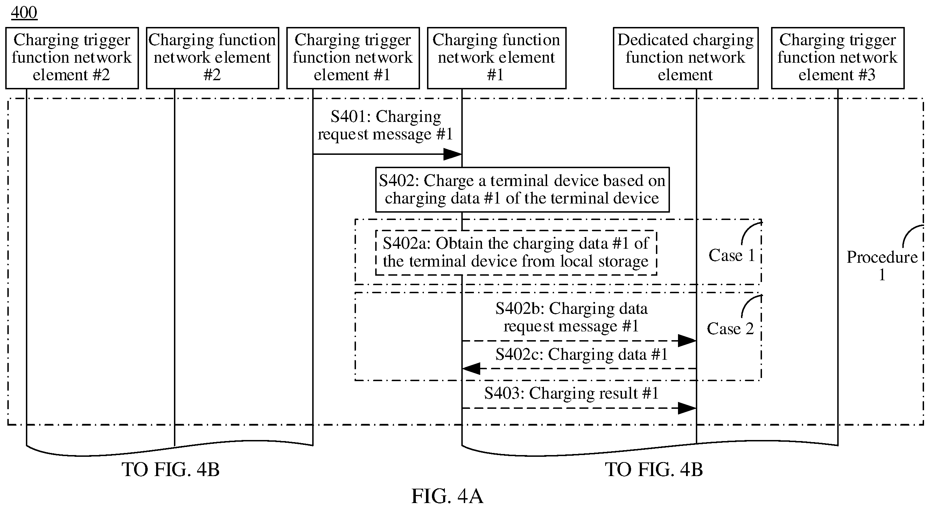

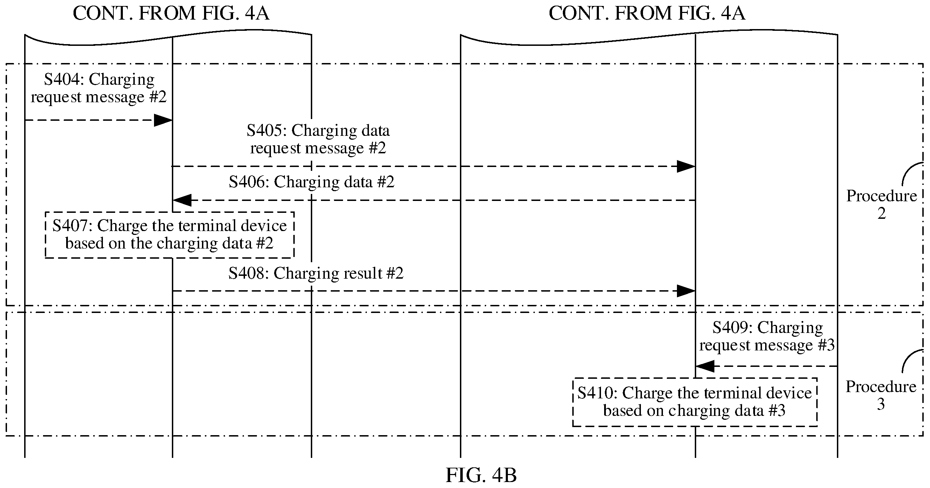

FIG. 4A and FIG. 4B are an example flowchart of a method 400 according to an embodiment of this application;

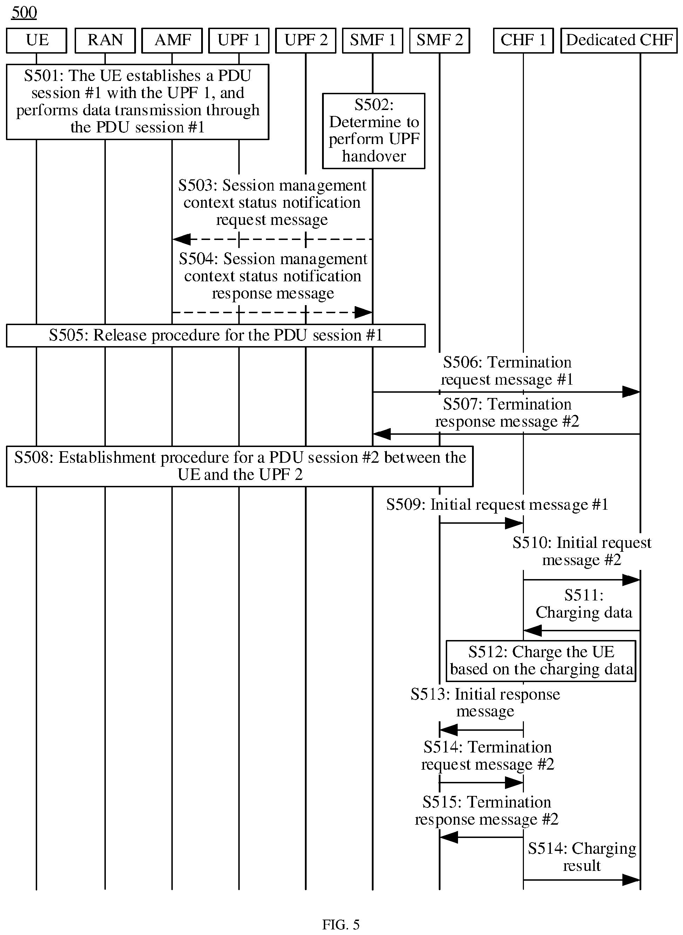

FIG. 5 is an example flowchart of a method 500 according to an embodiment of this application;

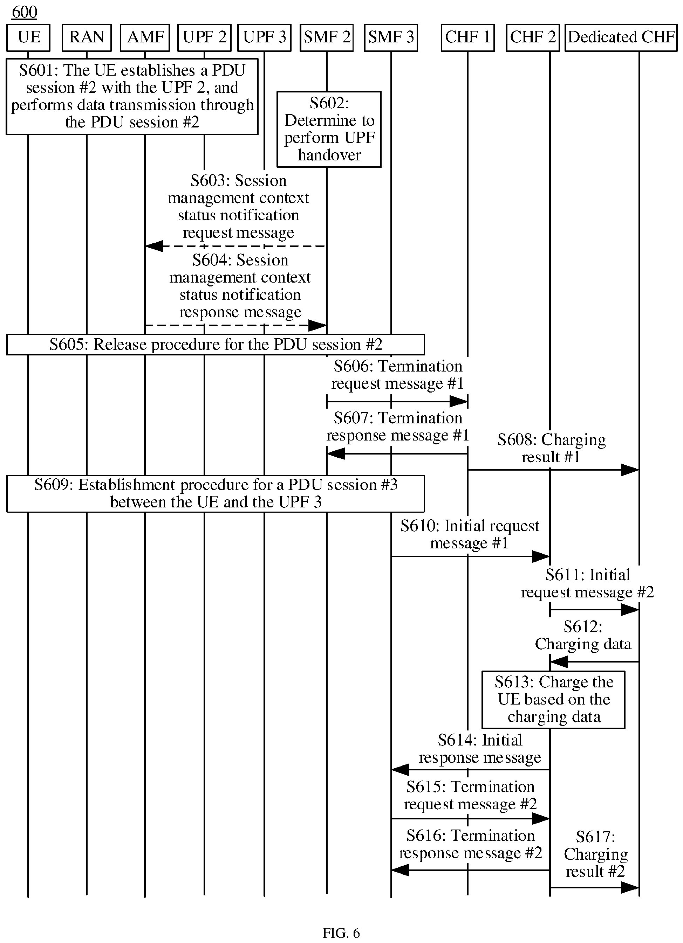

FIG. 6 is an example flowchart of a method 600 according to an embodiment of this application;

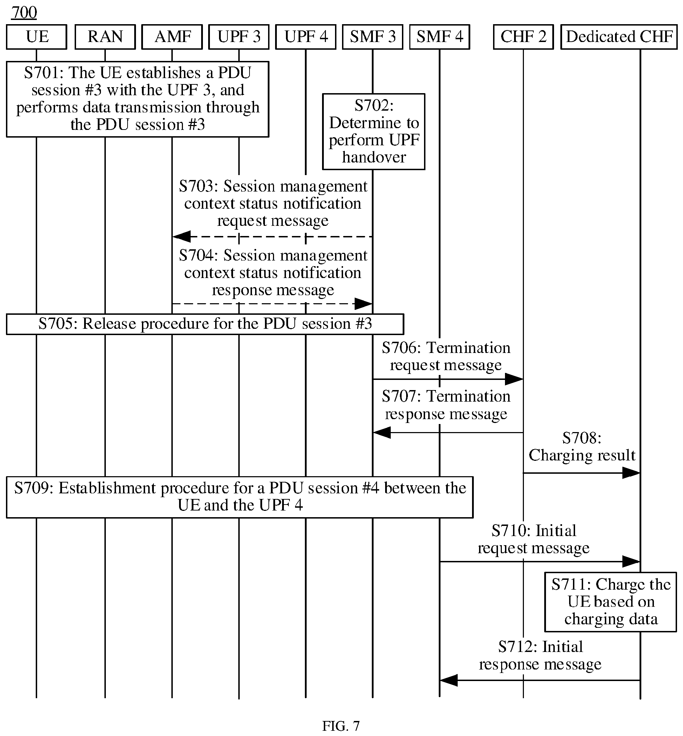

FIG. 7 is an example flowchart of a method 700 according to an embodiment of this application;

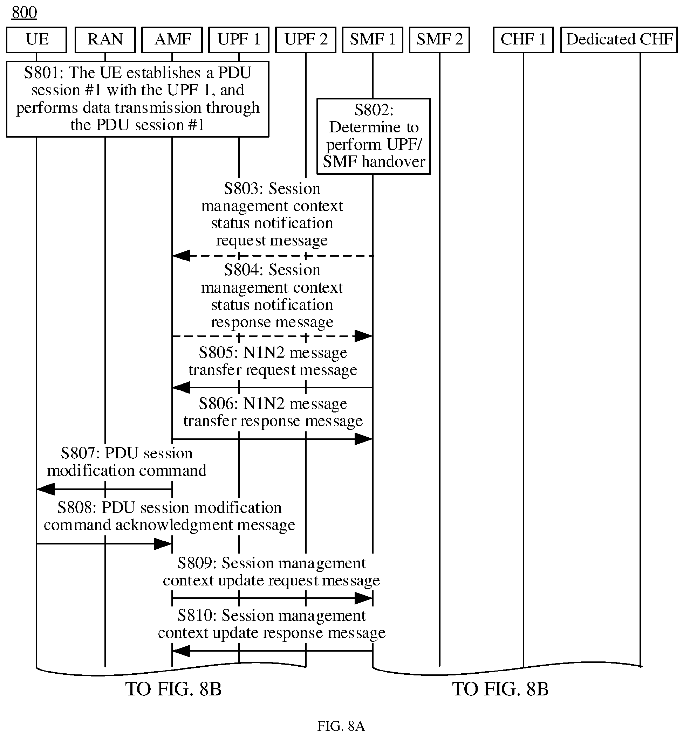

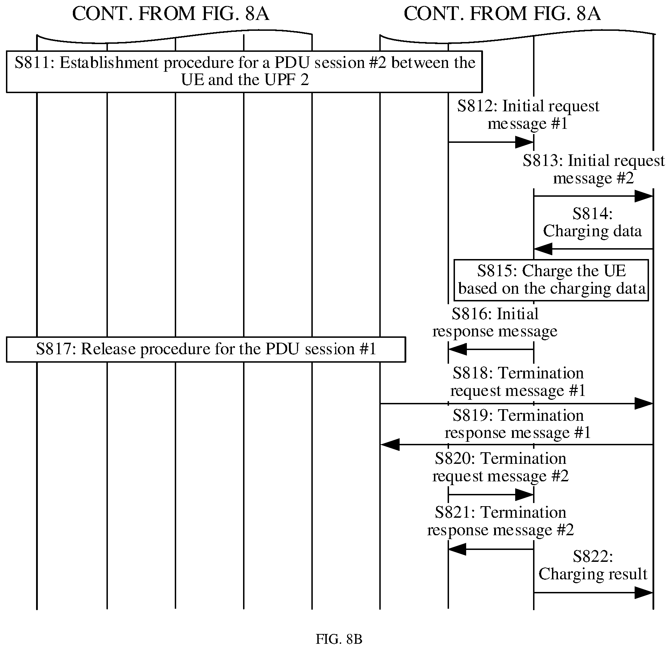

FIG. 8A and FIG. 8B are an example flowchart of a method 800 according to an embodiment of this application;

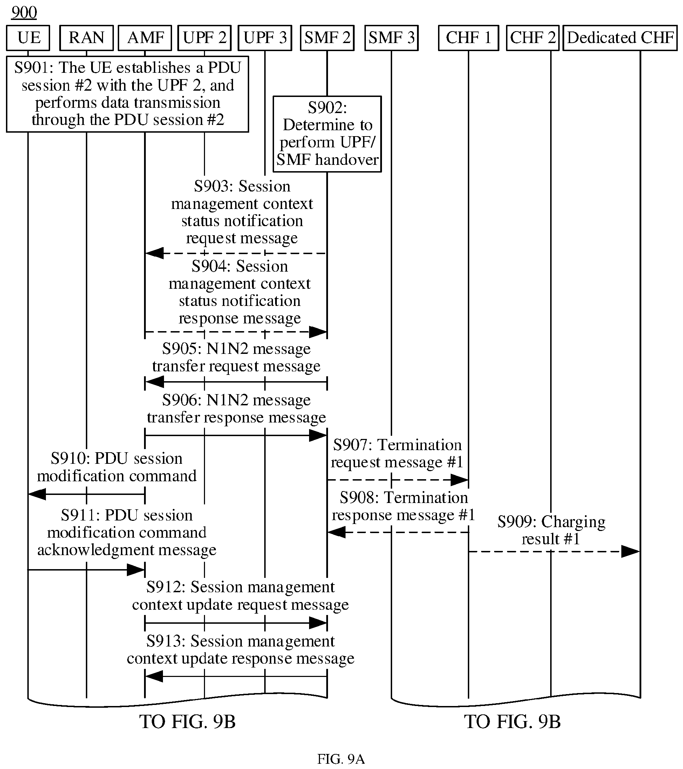

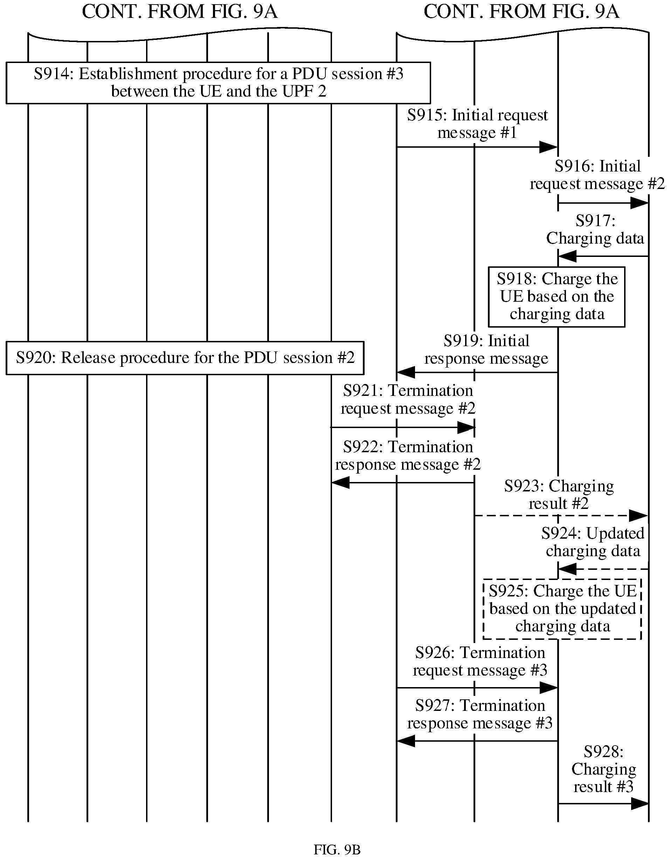

FIG. 9A and FIG. 9B are an example flowchart of a method 900 according to an embodiment of this application;

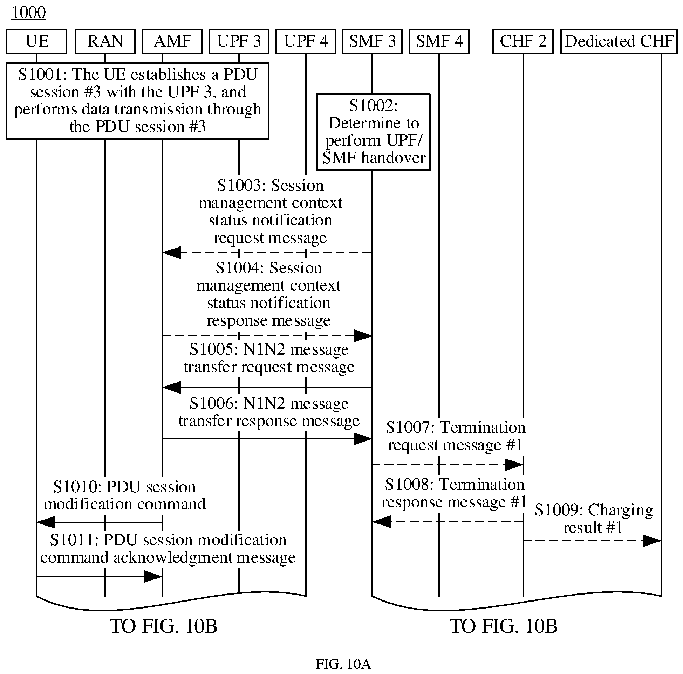

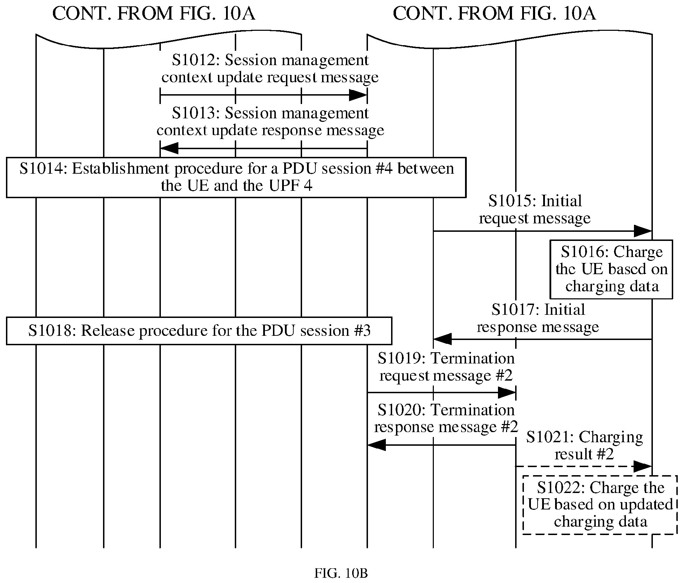

FIG. 10A and FIG. 10B are an example flowchart of a method 1000 according to an embodiment of this application;

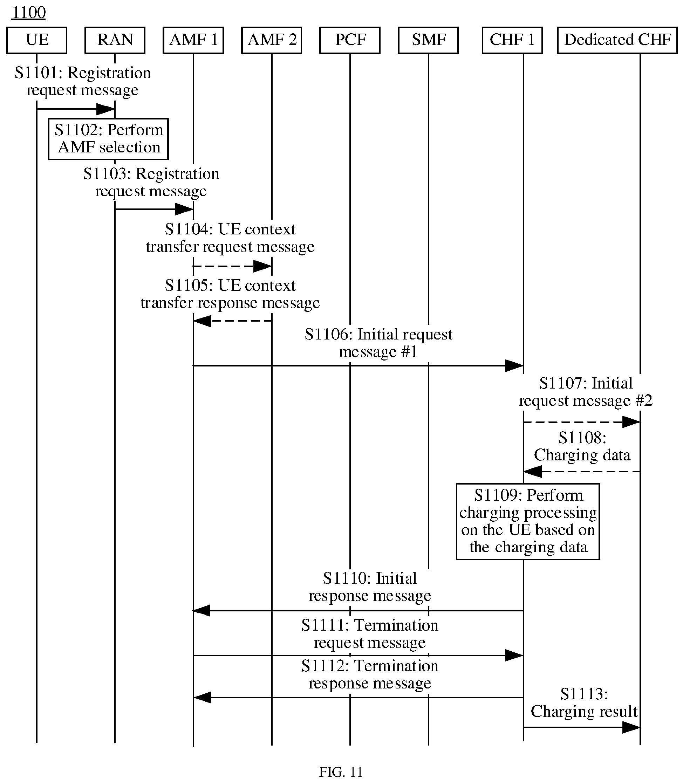

FIG. 11 is an example flowchart of a method 1100 according to an embodiment of this application;

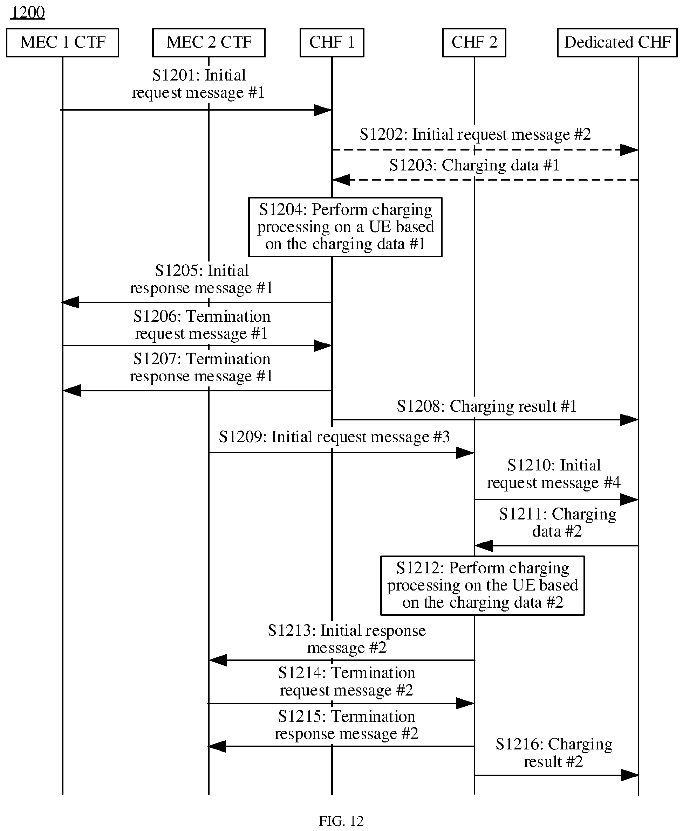

FIG. 12 is an example flowchart of a method 1200 according to an embodiment of this application;

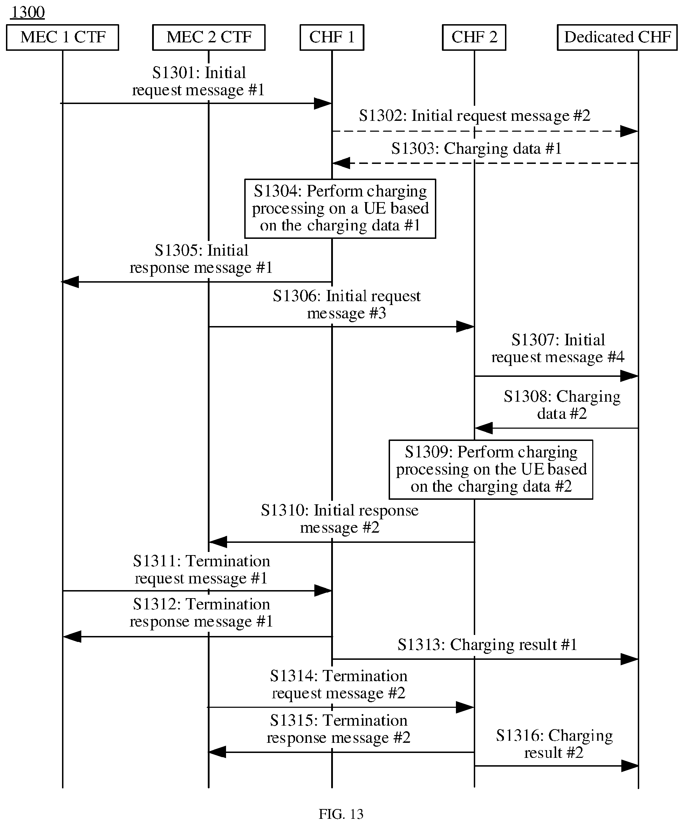

FIG. 13 is an example flowchart of a method 1300 according to an embodiment of this application;

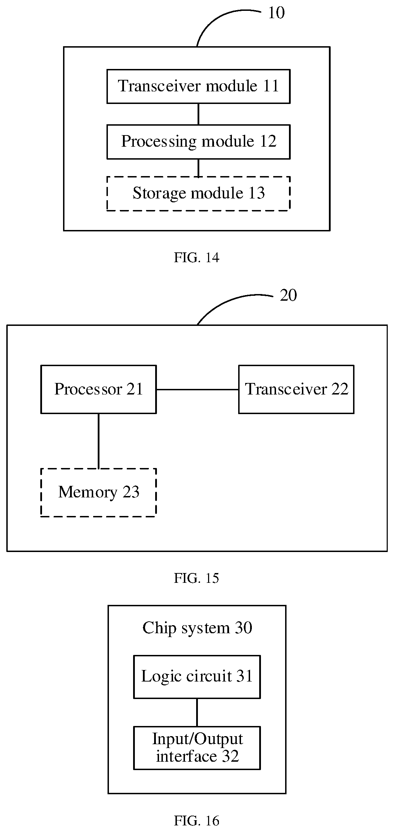

FIG. 14 is a schematic block diagram of a communication apparatus according to an embodiment of this application;
FIG. 15 is a schematic block diagram of a communication apparatus according to another embodiment of this application; and
FIG. 16 is a schematic block diagram of a communication apparatus according to still another embodiment of this application.

### DESCRIPTION OF EMBODIMENTS

To make the objectives, technical solutions, and advantages of this application clearer, the following further describes this application in detail with reference to the accompanying drawings.

For ease of understanding of embodiments of this application, the following several descriptions are provided first.
1. In the descriptions of embodiments of this application, unless otherwise specified, "a plurality of" means two or more.
2. In embodiments of this application, unless otherwise specified or there is a logic conflict, terms and/or descriptions in different embodiments are consistent and may be mutually referenced, and technical features in the different embodiments may be combined based on an internal logical relationship thereof, to form a new embodiment.
3. Various numerals in this application are for differentiation merely for ease of description, but are not for limiting the scope of this application. Sequence numbers in this application do not mean execution sequences. The execution sequences of the processes should be determined based on functions and internal logic of the processes. For example, in this specification, the claims, and the accompanying drawings of this application, the terms "first", "second", "third", "fourth", and various other ordinal number terms (if existent) are for distinguishing between similar objects, but do not necessarily indicate a specific order or sequence. It should be understood that the data termed in such a way is interchangeable in appropriate circumstances, so that embodiments described herein can be implemented in orders other than the order illustrated or described herein.
4. The terms "include" and "have" and any variant thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.
5. In this application, "indicate" may be understood as "enable", and "enable" may include "directly enable" and "indirectly enable". When a piece of information is described to enable A, the information may directly enable A or indirectly enable A, but it does not mean that the information definitely carries A.
   Information enabled by the information is referred to as to-be-enabled information. In a specific implementation process, the to-be-enabled information may be enabled in many manners, for example, but not limited to, directly enabling the to-be-enabled information, for example, enabling the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may alternatively be enabled through a pre-agreed (for example, specified in a protocol) sequence of all information, to reduce enabling overheads to some extent. In addition, a common part of all information may alternatively be identified and enabled in a unified manner, to reduce enabling overheads caused by enabling the same information separately.
6. In this application, "preconfigured" may include being predefined, for example, defined in a protocol. "Being predefined" may be implemented by prestoring corresponding code or a corresponding table in a device (for example, including network elements) or in another manner that may indicate related information. A specific implementation thereof is not limited in this application.
7. "Store" in embodiments of this application may be storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into an encoder, a processor, or a communication apparatus. A type of the memory may be a storage medium in any form. This is not limited in this application.
8. A "protocol" in embodiments of this application may be a standard protocol in the communication field, and may include, for example, a 4G/5G protocol, a new radio (new radio, NR) protocol, and a related protocol applied to a future communication system. This is not limited in this application.
9. Arrows or blocks shown by dashed lines in the diagrams of the accompanying drawings in this specification of this application indicate optional steps or optional modules.

In a 4G network, online charging and offline charging use different architectures. A user needs to select a payment type when opening an account. In a 5G network, to support development of a 5G service, the 3rd generation partnership project (3rd generation partnership project, 3GPP) introduces a charging architecture that converges the online charging and the offline charging.

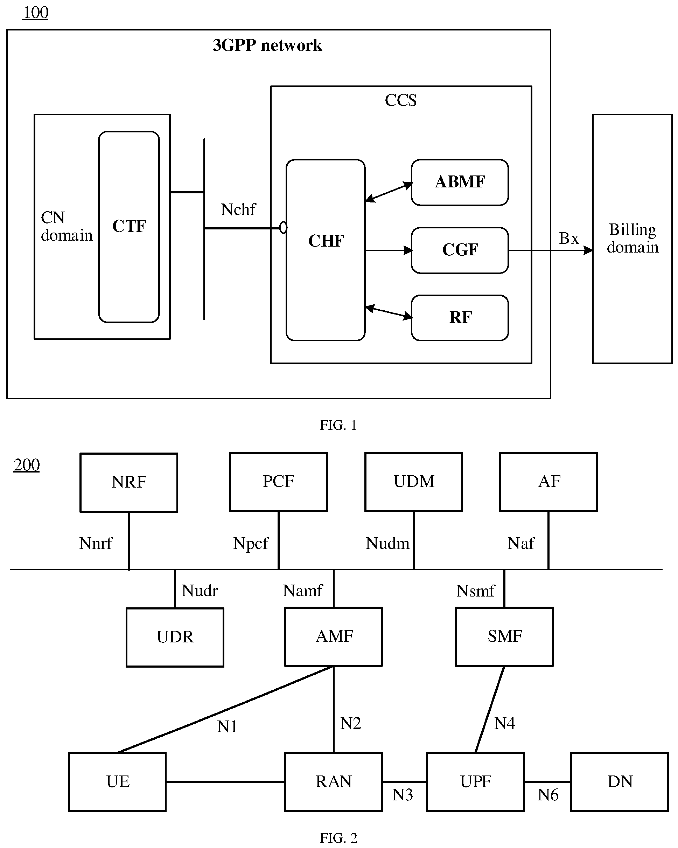

With reference to FIG. 1, the following describes, by using an example, a charging architecture 100 applicable to an embodiment of this application.

In the charging architecture 100, each network function (network function, NF) in a core network (core network, CN) domain is connected to a converged charging system (converged charging system, CCS) through a unified service-based interface Nchf. A CTF in the CN domain may trigger, through the interface Nchf, the CCS to provide a charging service for a user. The CCS selects an online charging mode or an offline charging mode based on a user requirement and a service requirement.

The CTF is located in a service system, and is configured to perform service logic or service control (for example, control bypassing of a service based on a quota granted by the charging system). For example, the CTF provides a 5G core network with a session management function (session management function, SMF) network element of a data service, an internet protocol (internet protocol, IP) multimedia subsystem (IP multimedia subsystem, IMS) application server (application server, AS) of an IMS voice service, or an edge configuration server (edge configuration server, ECS), an edge enabler server (edge enabler server, EES), or an edge application server (edge application server, EAS) in a MEC scenario.

The CCS is the converged charging system that converges the online charging (online charging) mode and the offline charging (offline charging) mode. The CCS may provide only an online charging function (the CCS is essentially an online charging system), provide only an offline charging function (the CCS is essentially an offline charging system), or provide both the online charging function and the offline charging function (the CCS is essentially the converged charging system). Online charging refers to an authorization and charging process in which charging information is collected and whether there is a sufficient quota for communication is determined in real time in a session process. The offline charging refers to a process in which charging is performed by generating a call detail record file based on communication behavior.

The CCS includes a charging function (charging function, CHF), an account balance management function (account balance management function, ABMF), a rating function (rating function, RF), a charging gateway function (charging gateway function, CGF), and the like. The following briefly describes the functions in the CCS.
(1) CHF: The CHF may receive a charging request from the CTF through a service-based charging interface. The charging request carries quota application information, usage information, and the like of the CTF. The CHF may perform charging processing based on the received charging request and related information (for example, a user type, customer information, an account balance, a service trustlist/blocklist, an account balance change trend, and a remaining validity period of a package) of a user service, and send a charging processing result to the CTF, so that the CTF adjusts a charging operation for the user service.
(2) ABMF: The ABMF is configured to manage the account balance of the user, where the management includes account reservation, locking, deduction, and the like.
(3) RF: The RF is configured to determine a needed tariff, a needed price, or needed usage based on a service using request and user information. For example, the RF receives charging event information provided by an online charging function (online charging function, OCF), determines network resource usage of the OCF, and returns a rating result to the OCF.
(4) CGF: The CGF is configured to perform the following functions: receiving a CDR from a CDF in real time; CDR preprocessing; CDR verification, merging, and formatting; CDR error processing; persistently storing the call detail record; call detail record routing and filtering, that is, storing the call detail record in a separate file based on a filtering condition like a call detail record type, a call detail record parameter, or a source CDF; CDR file management such as file creation, a file opening/closing, and file deletion; and transmitting the CDR file to a billing domain (billing domain, BD). It may be understood that each CCS has a matched BD, and the BD may perform billing processing on a UE based on the CDR file received from the CGF.

The technical solutions provided in this application may be applied to various communication systems, for example, a 5th generation (5th generation, 5G) communication system (which is also referred to as a new radio (new radio, NR) system), a 4th generation (4th generation, 4G) communication system (which is also referred to as a long term evolution (long term evolution, LTE) system), an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system.

The following uses the 5G system as an example to describe, with reference to FIG. 2, a diagram of a possible network architecture of the CN domain in the charging architecture 100 shown in FIG. 1. It may be understood that FIG. 2 is described by using only the 5G system as an example. However, this application is not limited thereto. This application may alternatively be applicable to another future network system.

As shown in FIG. 2, the network architecture is, for example, a 5G system (5th generation system, 5GS) defined in the 3rd generation partnership project (3rd Generation Partnership Project, 3GPP) protocol TS 23.501. The network architecture may be divided into two parts: an access network (access network, AN) and a core network (core network, CN). The access network may be for implementing a function related to radio access, and the core network includes a plurality of logical functional entities. The following briefly describes network elements or devices shown in FIG. 3.
1. A user equipment (user equipment, UE) may be referred to as a terminal device (terminal equipment), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal device may be a device that provides a user with voice/data connectivity, for example, a handheld device or a vehicle-mounted device that has a wireless connection function. Currently, some examples of the terminal may be a mobile phone (mobile phone), a tablet computer (pad), a computer (for example, a laptop or a palmtop computer) with a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a 5G network, or a terminal device in a future evolved public land mobile network (public land mobile network, PLMN).

In addition, the terminal device may alternatively be a terminal device in an internet of things (Internet of things, IoT) system. IoT is an important component of future information technology development. A main technical feature of the IoT is to connect things to a network by using a communication technology, to implement a smart network for human-machine interconnection and thing-thing interconnection. An IoT technology may implement massive connections, deep coverage, and terminal power saving by using, for example, a narrow band (narrow band, NB) technology.

In addition, the terminal device may alternatively include an intelligent printer, a train detector, and the like, and main functions include collecting data (which is a function of some terminal devices), receiving control information and downlink data of a network device, sending an electromagnetic wave, and transmitting uplink data to the network device.

It should be understood that the user equipment may be any device that may access a network. The terminal device and an access network device may communicate with each other by using an air interface technology.

Optionally, the user equipment may serve as a base station. For example, the user equipment may serve as a scheduling entity, and provide a sidelink signal between user equipments in V2X, D2D, or the like. For example, a cellular phone and a car communicate with each other by using the sidelink signal. The cellular phone and a smart household device communicate with each other without relaying a communication signal by using the base station.

2. A (radio) access network ((radio) access network, (R)AN) device is configured to provide a network access function for an authorized user equipment in a specific area, and can use transmission tunnels of different quality of service based on a level of the user equipment, a service requirement, and the like.

The (R)AN can manage a radio resource, and provide an access service for the user equipment, to forward a control signal and user equipment data between the user equipment and the core network. The (R)AN may also be understood as a base station in a conventional network.

For example, the access network device in embodiments of this application may be any communication device with a wireless transceiver function and for communicating with the user equipment. The access network device includes but is not limited to an evolved NodeB (evolved NodeB, eNB), a gNB or a transmission point (TRP or TP) in the 5G system, for example, an NR system, or one antenna panel or a group of antenna panels (including a plurality of antenna panels) of a base station in the 5G system, or may be a network node that constitutes a gNB or a transmission point, for example, a baseband unit (BBU) or a distributed unit (distributed unit, DU).

In some deployment, the gNB may include a central unit (central unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from the information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, and an AAU node. In addition, the CU may be classified as an access network device in the radio access network (radio access network, RAN), or the CU may be classified as an access network device in the core network (core network, CN). This is not limited in this application.

3. A user plane function (user plane function, UPF) network element is for packet routing and forwarding, quality of service (quality of service, QoS) handling for user plane data, and the like. For ease of description, in embodiments of this application, the user plane function network element is referred to as a "UPF" for short.

In a future communication system, a user plane network element may still be the UPF network element, or may have another name. This is not limited in this application.

4. An access and mobility management function (access and mobility management function, AMF) network element: The access and mobility management function network element is mainly configured to perform mobility management, access management, and the like, and may be configured to implement a function other than session management in an MME function, for example, an access authorization/authentication function. For ease of description, in embodiments of this application, the access and mobility management function network element is referred to as an "AMF" for short.

In a future communication system, an access and mobility management network element may still be the AMF, or may have another name. This is not limited in this application.

5. A session management function (session management function, SMF) network element is mainly for session management, assignment and management of an internet protocol (internet protocol, IP) address of a user equipment, selection and control of a user plane function, termination of interfaces toward policy control and charging functions, downlink data notification, and the like. For ease of description, in embodiments of this application, the session management function network element is referred to as an "SMF" for short.

The SMF is a type of session management network element. In a future communication system, the session management network element may still be the SMF, or may have another name. This is not limited in this application.

6. A policy control function (policy control function, PCF) network element is configured to: provide a unified policy framework for governing network behavior, provide policy rule information for a control plane function network element (for example, an AMF or an SMF), and so on.

In a future communication system, a policy control network element may still be the PCF network element, or may have another name. This is not limited in this application.

7. A network repository function (network repository function, NRF) network element mainly provides service registration, discovery, and authorization, and maintains available network function (network function, NF) instance information. For example, the NRF may be configured to store description information of an NF entity and description information of a service provided by the NF entity. In addition, the NRF may further implement on-demand configuration of a network function and a service and interconnection between NFs.

8. An application function (application function, AF) network element is configured to perform application-affected data routing, wirelessly access a network exposure function network element, interact with a policy framework for policy control, and so on. For ease of description, in embodiments of this application, the application function network element is referred to as an "AF" for short.

In a future communication system, the application function network element may still be the AF network element, or may have another name. This is not limited in this application.

9. A unified data management (unified data management, UDM) network element is configured to perform UE identifier processing, access authentication, registration, mobility management, and the like.

In a future communication system, the unified data management may still be the UDM network element, or may have another name. This is not limited in this application.

10. A data network (data network, DN) is a network outside an operator network. The operator network may access a plurality of DNs, and a plurality of services may be deployed on the DN, to provide a terminal device with a service like data and/or a voice. For example, the DN is a private network of a smart factory, a sensor installed in a workshop of the smart factory may be the terminal device, a control server of the sensor is deployed in the DN, and the control server may serve the sensor. The sensor may communicate with the control server, to obtain instructions of the control server, transmit collected sensor data to the control server based on the instructions, and so on. For another example, the DN is an internal office network of a company, a mobile phone or a computer of an employee of the company may be the terminal device, and the mobile phone or the computer of the employee may access information, a data resource, and the like in the internal office network of the company.

In the network architecture shown in FIG. 2, the network elements may communicate with each other through interfaces shown in the figure. As shown in the figure, the UE and the AMF may interact with each other through an N1 interface, and an interaction message may be referred to as, for example, an N1 message (N1 Message). The RAN and the AMF may interact with each other through an N2 interface, and the N2 interface may be for sending a non-access stratum (non-access stratum, NAS) message and the like. The RAN and the UPF may interact with each other through an N3 interface, and the N3 interface may be for communicating user plane data and the like. The SMF and the UPF may interact with each other through an N4 interface, and the N4 interface may be for communicating information such as tunnel identification information of an N3 connection, data buffering indication information, and a downlink data notification message. The UPF and the DN may interact with each other through an N6 interface, and the N6 interface may be for communicating user plane data and the like. A relationship between another interface and each network element is shown in FIG. 2. For brevity, details are not described one by one herein.

It may be understood that, in the network architecture shown in FIG. 2, an example in which the network elements communicate with each other through point-to-point interfaces is used for description. However, this application is not limited thereto. That is, the network elements may alternatively communicate with each other through other types of interfaces (for example, service-based interfaces).

To resolve the problem mentioned in the background, as shown in (a) in FIG. 3, this application provides a communication system 300(a). The system 300(a) includes a charging trigger function network element, a charging function network element, and a dedicated charging function network element.

In a possible example, the charging trigger function network element is configured to send a charging request message to the charging function network element, where the charging request message is for requesting to perform charging processing on a terminal device. The charging function network element is configured to perform charging processing on the terminal device based on charging data of the terminal device, where the charging data is received by the charging function network element from the dedicated charging function network element, and the dedicated charging function network element is a charging system that persistently stores user data of the terminal device.

Optionally, the charging function network element is further configured to send a charging data request message to the dedicated charging function network element. The dedicated charging function network element is further configured to send the charging data to the charging function network element based on the charging data request message. The charging function network element is further configured to receive the charging data from the dedicated charging function network element.

For example, in the communication system provided in this embodiment of this application, after receiving the charging request message from the charging trigger function network element, the charging function network element performs charging processing on the terminal device based on the user data obtained from the dedicated charging function network element. In this way, cross-area transmission of a large amount of charging information generated in a charging process can be reduced, to save a network resource and reduce operation costs.

It should be understood that, for a specific interaction process between the network elements in (a) in FIG. 3, refer to a procedure of a method shown in FIG. 4A and FIG. 4B. For a specific implementation solution, refer to detailed descriptions of the method 400.

The communication system 300(a) shown in (a) in FIG. 3 may be used in the charging architecture 100 shown in FIG. 1. In this case, the charging function network element in the communication system 300(a) may correspond to the CHF in FIG. 1, and the charging trigger function network element in the communication system 300(a) may correspond to the CTF in FIG. 1. It may be understood that the dedicated charging function network element in the communication system 300(a) corresponds to a CHF in a home CCS.

With reference to (b) in FIG. 3, the following describes, by using an example, a system architecture 300(b) applicable to an embodiment of this application. As shown in (b) in FIG. 3, the system architecture 300(b) includes a dedicated CCS and a CCS 1, and optionally, further includes a CCS 2.

The dedicated CCS (dedicated CCS) is a charging system that is configured by an operator and that persistently stores user data of a UE (the user data includes a user name, a subscribed package, an account balance, a bill, a call detail record, and the like). For example, the dedicated CCS is a CCS of a subscription area of the UE in a home public land mobile network (public land mobile network, PLMN) of the UE. Each UE corresponds to one dedicated CCS.

The dedicated CCS provides an interface between the dedicated CCS and an external system (for example, a customer relationship management (customer relationship management, CRM) system, a top-up server, an accounting system, or charging capability exposure). That is, the external system may perform a related operation for the UE by using the dedicated CCS. For example, an external communication system queries for the bill of the UE by using the dedicated CCS, or the external communication system synchronizes account data of the UE to the dedicated CCS after completing topping up of the UE.

The dedicated CCS includes a dedicated CHF (dedicated CHF). The dedicated CHF is configured to directly modify and operate thestored user data of a user. The dedicated CHF is further configured to determine a serving CHF (Serving CHF) of the UE and coordinate a change of the serving CHF of the UE. The serving CHF is included by a serving CCS (Serving CCS) of the UE, and the serving CCS of the UE is a CCS that currently provides a charging service for the UE. A dedicated charging system in this application is the dedicated CCS, or may refer to the dedicated CHF in the dedicated CCS.

The CCS 1 is a candidate CCS of the UE other than the dedicated CCS, where the candidate CCS is a serving CCS that may provide the charging service for the UE, a CCS that may become the serving CCS of the UE, or a CCS other than the dedicated CCS in the home PLMN of the UE.

It may be understood that a quantity of candidate CCSs of the UE is not limited in this application. In other words, in addition to the dedicated CCS and the CCS 1, the UE may further have one or more other candidate CCSs, for example, the CCS 2. This is not limited in this application.

In this embodiment of this application, as a location of the UE is changed, any one of the dedicated CCS, the CCS 1, and the CCS 2 may become the serving CCS of the UE. In other words, the serving CCS of the UE may be changed as the location of the UE is changed. For example, when the UE moves to a coverage area of the dedicated CCS (for example, the UE moves from a coverage area of the CCS 1/CCS 2 to the coverage area of the dedicated CCS), the dedicated CCS is to serve as the serving CCS of the UE; when the UE moves to a coverage area of the CCS 1 (for example, the UE moves from a coverage area of the dedicated CCS/CCS 2 to the coverage area of the CCS 1), the CCS 1 is to serve as the serving CCS of the UE; or when the UE moves to a coverage area of the CCS 2 (for example, the UE moves from a coverage area of the dedicated CCS/CCS 1 to the coverage area of CCS 2), the CCS 2 is to serve as the serving CCS of the UE. In other words, in this embodiment of this application, a CCS nearest to the UE serves as the serving CCS of the UE.

It may be understood that the network architecture applied to embodiments of this application is merely an example, and a network architecture applicable to embodiments of this application is not limited thereto. Any network architecture that can implement functions of the foregoing network elements is applicable to embodiments of this application. That is, the network architecture and the service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of the new service scenario, the technical solutions provided in embodiments of this application are also applicable to similar technical problems.

It may be further understood that the network elements or the devices listed in the foregoing network architecture are merely examples for description, and the network architecture applicable to this application may further include another network element or device. This is not limited in this application.

It may be further understood that the names of the foregoing network elements or devices are defined merely for distinguishing between different functions, and should not constitute any limitation on this application. This application does not exclude a possibility that another name is used in the 4G network, the 5G network, and another future network. For example, in a 6G network, some or all of the foregoing network elements may use a term in 4G/5G, or may use another name.

The communication device in embodiments of this application includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). An operating system may be any one or more computer operating systems that implement service processing through a process (Process), for example, a Linux operating system, a Unix operating system, an Android operating system, an iOS operating system, or a Windows operating system. The application layer includes applications such as a browser, an address book, text processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program and that is in the terminal device or the network device.

In addition, the aspects or features of embodiments of this application may be implemented by using the method or an apparatus, or may be implemented by using a product using standard programming and/or engineering technologies. The term "product" used in this application covers a computer program that can be accessed from any computer-readable component, carrier, or medium. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel and various other media that can store, include, and/or carry instructions and/or data.

The following uses interaction between network elements as an example to describe in detail the communication method provided in embodiments of this application. It should be understood that, for terms and steps in embodiments of this application, reference may be made to each other. A specific operation method in a method embodiment in this application may also be applied to an apparatus embodiment or a system embodiment.

FIG. 4A and FIG. 4B are an example flowchart of a method 400 according to an embodiment of this application. In the method 400, a charging function network element (namely, a charging function network element that receives a charging request message from a charging trigger function network element) nearest to a terminal device is used to charge the terminal device, and a dedicated charging function network element maintains charging data of the terminal device. The following describes the method 400 by using an example with reference to steps in FIG. 4A and FIG. 4B.

S401: A charging trigger function network element #1 sends a charging request message #1 to a charging function network element #1. Accordingly, the charging function network element #1 receives the charging request message #1 from the charging trigger function network element #1.

For example, after the terminal device is handed over to the charging trigger function network element #1 because the terminal device moves, the terminal device triggers establishment of a service session between the terminal device and the charging trigger function network element #1. It may be understood that, in an online charging scenario, the terminal device triggers the establishment of the service session between the terminal device and the charging trigger function network element #1 after terminating a service session between the terminal device and an old charging trigger function network element. In an offline charging scenario, the terminal device directly triggers to establish the service session between the terminal device and the charging trigger function network element #1. The old charging trigger function network element herein is a network element that serves the terminal device before the charging trigger function network element #1. When receiving a service request for the terminal device, the charging trigger function network element #1 sends the charging request message #1 to the charging function network element #1, where the charging request message #1 is for requesting to perform charging processing on the terminal device. For example, when moving to a coverage area of a network in which the charging trigger function network element #1 is located, the terminal device initiates a registration request or a protocol data unit session establishment request to the charging trigger function network element #1. After receiving the request from the terminal device, the charging trigger function network element #1 sends the charging request message #1 to the charging function network element #1.

The following describes, by using examples, specific implementations in which the charging trigger function network element #1 sends the charging request message #1 to the charging function network element #1.

In a first possible implementation, the charging trigger function network element #1 sends the charging request message #1 to the charging function network element #1 via the dedicated charging function network element of the terminal device, where the dedicated charging function network element is a charging system that persistently stores user data of a UE. For example, the charging trigger function network element #1 queries for the dedicated charging function network element corresponding to the terminal device, and then sends the charging request message #1 to the dedicated charging function network element. After receiving the charging request message #1, the dedicated charging function network element queries for the charging function network element #1. For example, the dedicated charging function network element is preconfigured with a correspondence between a charging trigger function network element and a charging function network element (including a correspondence between the charging trigger function network element #1 and the charging function network element #1). In this case, the dedicated charging function network element determines, based on preconfigured information, the charging function network element #1 corresponding to the charging trigger function network element #1. Further, the dedicated charging function network element redirects the charging request message #1 to the charging function network element #1. Optionally, in this implementation, the charging trigger function network element #1 or the dedicated charging function network element may further include address information of the dedicated charging function network element, for example, internet protocol address information of the dedicated charging function network element or identification information of the dedicated charging function network element, in the charging request message #1.

It may be understood that specific implementations in which the charging trigger function network element #1 queries for the dedicated charging function network element corresponding to the terminal device are not limited in this application. The following provides two possible examples.

Example 1: The charging trigger function network element #1 queries, via a network repository function network element, for the dedicated charging function network element corresponding to the terminal device. For example, the network repository function network element stores an association relationship, shown in Table 1, between identification information of the terminal device and the address information of the dedicated charging function network element. The address information of the dedicated charging function network element is information for determining the dedicated charging function network element. For example, the address information of the dedicated charging function network element may be the identification information or the address information of the dedicated charging function network element. In Table 1, "SUPI/GPSI" represents an identifier of the terminal device, and "dedicated CHFInfo" represents the address information of the dedicated charging function network element corresponding to the terminal device. It may be understood that the network repository function network element may store one or more association relationships between the identification information of the terminal device and the address information of the dedicated charging function network element. This is not limited in this application.

**Table 1**

| Key | Address information | Function |
|---|---|---|
| SUPI/GPSI | dedicated CHFInfo | For locating the dedicated charging function network element of the terminal device |

The charging trigger function network element #1 may send a query request message to the network repository function network element, and include the identifier of the terminal device (for example, the SUPI or the GPSI of the terminal device) in the query request message. The network repository function network element queries, based on the identifier of the terminal device carried in the query request message, for the dedicated charging function network element corresponding to the identifier of the terminal device, and then returns the address information of the dedicated charging function network element to the charging trigger function network element #1.

Example 2: The charging function network element #1 determines, in local configuration information based on location information of the terminal device and/or information about the charging trigger function network element #1, the address information of the dedicated charging function network element corresponding to the location information of the terminal device and/or the information about the charging trigger function network element #1, and then sends the charging request message #1 to the dedicated charging function network element based on the address information.

In a second possible implementation, the charging trigger function network element #1 queries for address information of the charging function network element #1 via the dedicated charging function network element, and then sends the charging request message #1 to the charging function network element #1 based on the address information. For implementations in which the dedicated charging function network element determines the address information of the charging function network element #1, refer to the examples in the first possible implementation. Details are not described herein again. Optionally, in this implementation, the charging trigger function network element #1 may further include address information of the dedicated charging function network element in the charging request message #1.

In a third possible implementation, the charging trigger function network element #1 obtains address information of the charging function network element #1 based on information about the charging trigger function network element #1 and/or location information of the terminal device, and then sends the charging request message to the charging function network element #1 based on the address information.

For example, the charging trigger function network element #1 sends a query request message to a network repository function network element, where the query request message is for requesting to obtain address information of a candidate charging function network element configured to perform charging processing on the terminal device, and the query request message includes the location information of the terminal device and/or the information about the charging trigger function network element #1. After receiving the query request message from the charging trigger function network element #1, the network repository function network element queries for the address information of the candidate charging function network element corresponding to the location information of the terminal device and/or information about the charging trigger function network element #1. Specifically, for example, the network repository function network element stores a correspondence, shown in Table 2, between a serving NF and address information of a charging function network element. In Table 2, "Serving NF ID" represents information about a serving NF (namely, the charging trigger function network element #1, or another network element that serves the terminal device) of the terminal device, "location" represents the location information of the terminal device, and "CHFInfo" represents the address information of the charging function network element #1 corresponding to the location information of the terminal device and/or the information about the charging trigger function network element #1.

**Table 2**

| Key 1 | Key 2 | Address information | Function |
|---|---|---|---|
| Serving NF ID | location | CHFInfo | For locating the charging function network element |

The network repository function network element queries, based on the location information of the terminal device and/or the information about the charging function network element that are/is carried in the query request message, for the charging function network element #1 corresponding to the location information of the terminal device and/or the information about the charging function network element, and then returns the address information of the charging function network element #1 to the charging trigger function network element #1.

In a fourth possible implementation, the charging trigger function network element #1 determines, in local configuration information based on location information of the terminal device and/or information about the charging trigger function network element #1, address information of the charging function network element #1 corresponding to the location information of the terminal device and/or the information about the charging trigger function network element #1, and then sends the charging request message to the charging function network element #1 based on the address information. It may be understood that the local configuration information may be preconfigured on the charging trigger function network element #1, or may be configured by another network element for the charging trigger function network element. This is not limited in this application.

In a fifth possible implementation, the charging trigger function network element #1 determines address information of the charging function network element #1 based on charging system address information in a policy delivered by a PCF, and then sends the charging request message #1 to the charging function network element #1 based on the address information.

S402: The charging function network element #1 charges the terminal device based on charging data #1 of the terminal device.

For example, the charging function network element #1 charges the terminal device based on the charging data #1 of the terminal device. In other words, the charging function network element #1 processes the charging request message #1 based on the charging data #1 of the terminal device. In other words, the charging function network element #1 becomes a serving charging function network element of the terminal device. For example, for online charging, the charging function network element #1 performs operations such as quota granting, rating, and account balance locking on the terminal device based on the charging data #1; and for offline charging, the charging function network element #1 performs operations such as opening of a call detail record for recording, call detail record processing, and response returning on the terminal device based on the charging data #1.

The charging data #1 is received by the charging function network element #1 from the dedicated charging function network element. The charging data #1 herein is data needed for charging the terminal device, for example, user account data (a user name, a user type, an account balance, a package, and rating information) and policy data (for example, a rating policy) that is applied to a user.

It may be understood that a network element that provides a charging service for the terminal device before the charging function network element #1 may be a dedicated charging network element, or may be another candidate charging function network element (for example, a charging function network element #2) other than the charging function network element #1 and the dedicated charging function network element. This is not limited in this application.

Optionally, before S402, the charging function network element #1 obtains the charging data #1 of the terminal device.

For two possible cases, the following describes, by using examples, specific implementations in which the charging function network element #1 obtains the charging data #1 of the terminal device.

### Case 1:

S402a: The charging function network element #1 obtains the charging data #1 of the terminal device from local storage.

For example, after receiving the charging request message #1, the charging function network element #1 determines whether there is charging data #1 of the terminal device in the local storage. If the charging function network element #1 locally stores the charging data #1, the charging function network element #1 may directly obtain the charging data #1 from the local storage.

It may be understood that, in this case, the charging function network element #1 receives the charging data #1 of the terminal device from the dedicated charging function network element in advance before S401. For example, before S401, the charging function network element #1 has been the serving charging function network element of the terminal device, and obtains the charging data #1 of the terminal device from the dedicated charging function network element and stores the charging data #1 of the terminal device. However, subsequently, the user goes offline and then goes online again. In this case, the charging function network element #1 may directly obtain the charging data #1 from the local storage. It may be understood that, in this embodiment of this application, the dedicated charging function network element maintains the charging data of the terminal device. Therefore, if the charging data of the terminal device is changed, the dedicated charging function network element may recycle the charging data #1 from the charging function network element #1. Therefore, the charging data #1 locally maintained by the charging function network element may be considered as latest charging data.

### Case 2:

S402b: The charging function network element #1 sends a charging data request message #1 to the dedicated charging function network element. Accordingly, the dedicated charging function network element receives the charging data request message #1 from the charging function network element #1.

For example, after receiving the charging request message #1, the charging function network element #1 may directly send the charging data request message #1 to the dedicated charging function network element, to request to obtain the charging data #1 of the terminal device, or when determining that there is no charging data #1 of the terminal device in local storage, the charging function network element #1 may send the charging data request message #1 to the dedicated charging function network element, to request to obtain the charging data #1 of the terminal device.

It may be understood that the charging data request message #1 may be the charging request message #1 received by the charging function network element #1 (that is, the charging function network element #1 forwards the received charging request message #1 to the dedicated charging function network element), or may be a message newly generated by the charging function network element #1. This is not limited in this application.

Optionally, before sending the charging data request message #1 to the dedicated charging function network element, the charging function network element #1 obtains the address information of the dedicated charging function network element, that is, determines the dedicated charging function network element.

For example, the charging function network element #1 queries, based on the identifier of the terminal device, the network repository function network element for the address information of the dedicated charging function network element corresponding to the terminal device. A specific manner is similar to the implementation in which the charging trigger function network element #1 queries, via the network repository function network element, for the dedicated charging function network element corresponding to the terminal device in the first possible implementation shown in S401. For brevity, details are not described herein again. Alternatively, the charging function network element #1 may query for the address information of the dedicated charging function network element via another network element or device that stores a correspondence between the terminal device and the dedicated charging function network element. This is not limited in this application.

For another example, the charging trigger function network element #1 or the dedicated charging function network element may include the address information of the dedicated charging function network element in the charging request message #1 (for details, refer to the descriptions of S401). In this case, the charging function network element #1 obtains the address information of the dedicated charging function network element from the charging request message #1.

Optionally, the dedicated charging function network element records that the charging function network element #1 is a network element that currently provides the charging service for the terminal device. In other words, the dedicated charging function network element stores information about a current serving charging function network element of the terminal device (namely, information about the charging function network element #1). In this way, the dedicated charging function network element can determine the current serving charging function network element of the terminal device, so that the dedicated charging function network element can subsequently interact with the serving charging function network element of the terminal device to serve the terminal device.

S402c: The dedicated charging function network element sends the charging data #1 to the charging function network element #1. Accordingly, the charging function network element #1 receives the charging data #1 from the dedicated charging function network element.

For example, after receiving the charging data request message #1 from the charging function network element #1, the dedicated charging function network element locally queries for the charging data #1 of the terminal device, and then sends the charging data #1 to the charging function network element #1.

The charging data #1 delivered by the dedicated charging function network element may be data in a plurality of forms, for example, a format file, a compressed format file, and information that is in a CDATA format and that is directly carried in a message. This is not limited in this application.

It may be understood that the dedicated charging function network element sends the charging data #1 of the terminal device to the charging function network element #1, to implicitly indicate the charging function network element #1 to serve as the serving charging function network element of the terminal device. That is, after receiving the charging data #1 from the dedicated charging function network element, the the charging function network element #1 serves as the serving charging function network element of the terminal device.

It may be further understood that the dedicated charging function network element may deliver the charging data #1 at a time, or may deliver the charging data #1 in a plurality of batches in a charging process. This is not limited in this application.

It may be further understood that, in this embodiment of this application, the charging data #1 delivered by the dedicated charging function network element to the charging function network element #1 may include only a part of data in the user data of the terminal device. For example, the charging data #1 is only data that is in the user data of the terminal device and that is for performing charging processing on the terminal device. Alternatively, the charging data #1 may include all data in the user data of the terminal device. This is not limited in this application.

S403: The charging function network element #1 sends a charging result #1 to the dedicated charging function network element. Accordingly, the dedicated charging function network element receives the charging result #1 from the charging function network element #1.

For example, after performing charging processing on the terminal device, the charging function network element #1 sends the charging result #1 to the dedicated charging function network element. The charging result #1 herein refers to data obtained by performing charging processing on the terminal device by the charging function network element #1. For example, the charging result #1 includes data such as user usage, an account balance change, and a package balance change. It may be understood that the charging function network element #1 may send the charging data #1 to the dedicated charging function network element at a time after charging is terminated, or may send the charging data #1 to the dedicated charging function network element in the plurality of batches in the charging process. This is not limited in this application.

Accordingly, after receiving the charging result #1 from the charging function network element #1, the dedicated charging function network element updates the user data of the terminal device based on the charging result #1.

According to the foregoing procedure (denoted as a procedure 1) of S401 to S403, the charging function network element #1 performs charging processing on the terminal device. Therefore, some temporary data in the charging process does not need to be communicated in a signaling network, so that a network resource can be saved, and operation costs can be reduced.

In addition, the charging data of the terminal device is managed by the dedicated charging function network element together, and the dedicated charging function network element may deliver only the part of data for the charging function network element to charge the terminal device, to further reduce signaling network load and improve charging efficiency.

Optionally, after the procedure 1, if the terminal device moves from a coverage area of a charging system of the charging function network element #1 to a coverage area of a charging system of the charging function network element #2, the serving charging function network element of the terminal device may be switched to the charging function network element #2. The following provides descriptions by using an example with reference to a procedure 2.

S404: A charging trigger function network element #2 sends a charging request message #2 to the charging function network element #2. Accordingly, the charging function network element #2 receives the charging request message #2 from the charging trigger function network element #2.

For example, when receiving a service request for the terminal device, the charging trigger function network element #2 sends the charging request message #2 to the charging function network element #2, where the charging request message #2 is for requesting to charge the terminal device. Manners in which the charging trigger function network element #2 sends the charging request message #2 to the charging function network element #2 are similar to the manners in which the charging trigger function network element #1 sends the charging request message #1 to the charging function network element #1 in S401. For brevity, details are not described herein again.

S405: The charging function network element #2 sends a charging data request message #2 to the dedicated charging function network element. Accordingly, the dedicated charging function network element receives the charging data request message #2 from the charging function network element #2.

For example, after receiving the charging request message #2 from the charging trigger function network element #2, the charging function network element #2 sends the charging data request message #2 to the dedicated charging function network element, to request to obtain charging data of the terminal device.

Optionally, the charging function network element #2 may send the charging data request message #2 to the dedicated charging function network element when determining that there is no charging data of the terminal device in local storage.

Optionally, before sending the charging data request message #2 to the dedicated charging function network element, the charging function network element #2 determines the dedicated charging function network element. Specific solutions are similar to the manners in which the charging function network element #1 determines the dedicated charging function network element in S402b. For brevity, details are not described herein again.

S406: The dedicated charging function network element sends charging data #2 to the charging function network element #2. Accordingly, the charging function network element #2 receives the charging data #2 from the dedicated charging function network element.

It may be understood that S406 is similar to S402c. A difference lies in that the charging data #2 sent by the dedicated charging function network element to the charging function network element #2 in S406 is charging data obtained through updating after S403. A specific implementation process is not limited.

Optionally, after the dedicated charging function network element sends the charging data #2 of the terminal device to the charging function network element, if the dedicated charging function network element receives a charging result #3 from the charging function network element #1, the dedicated charging function network element determines, based on the charging result #3, whether charging data of the terminal device needs to be updated to the charging function network element #2. The charging result #3 is data obtained by performing charging processing on the terminal device by the charging function network element #1 after S403.

For example, when the terminal device switches a session in session and service continuity mode (session and service continuity mode, SSC) 3, the charging function network element #1 may still charge the terminal device after S403. When the charging function network element #1 receives a termination request message, the charging function network element sends, to the dedicated charging function network element, the charging result #3 generated between sending of the charging result #1 and receiving of the termination request message.

The dedicated charging function network element determines, based on the charging result #3, whether the charging data needs to be updated to the charging function network element #2. For example, the charging data #2 delivered by the dedicated charging function network element to the charging function network element #2 in S406 is a part of data in the user data of the terminal device. For example, a package balance of the terminal device is 500 M, a quota provided by the dedicated charging function network element for the charging function network element #2 via the charging data #2 is 200 M, and the charging result #3 indicates that the terminal device has used 400 M. Because the quota provided by the dedicated charging function network element for the charging function network element #2 via the charging data #2 is greater than a balance (the balance is 100 M) of the terminal device, the dedicated charging function network element determines that the charging data of the terminal device needs to be updated to the charging function network element #2.

When the charging data of the terminal device needs to be updated to the charging function network element #2, the dedicated charging function network element sends updated charging data to the charging function network element #2. charging function network element #2 may continue to perform charging processing on the terminal device based on the updated charging data.

S407: The charging function network element #2 charges the terminal device.

S408: The charging function network element #2 sends a charging result #2 to the dedicated charging function network element, where the charging result #2 is data obtained by charging the terminal device by the charging function network element #2. Accordingly, the dedicated charging function network element receives the charging result #2 from the charging function network element #2.

It may be understood that S407 and S408 are similar to S402 and S403. A difference lies in that S407 and S408 are performed by the charging function network element #2, and S402 and S403 are performed by the charging function network element #1. For brevity, details are not described herein again.

After receiving the data obtained through the charging processing from the charging function network element #2, the dedicated charging function network element updates the user data of the terminal device.

Optionally, after the procedure 2, if the terminal device moves from the coverage area of the charging system of the charging function network element #2 to a coverage area of a charging system of the dedicated charging function network element, the serving charging function network element of the terminal device may be switched to the dedicated charging function network element. The following provides descriptions by using an example with reference to a procedure 3.

S409: A charging trigger function network element #3 sends a charging request message #3 to the dedicated charging function network element. Accordingly, the dedicated charging function network element receives the charging request message #3 from the charging trigger function network element #3.

For example, when receiving a service request for the terminal device, the charging trigger function network element #3 sends the charging request message #3 to the dedicated charging function network element, where the charging request message #3 is for requesting to charge the terminal device. Manners in which the charging trigger function network element #3 sends the charging request message #3 to the dedicated charging function network element are similar to the manners in which the charging trigger function network element #1 sends the charging request message #1 to the charging function network element #1 in S401. For brevity, details are not described herein again.

S410: The dedicated charging function network element charges the terminal device based on charging data #3.

For example, after receiving the charging request message #3 from the charging trigger function network element, the dedicated charging function network element queries for the charging data #3 corresponding to the terminal device, and then charges the terminal device based on the charging data #3. It may be understood that the charging data #3 is charging data obtained through updating by the dedicated charging function network element after S408.

It may be understood that an execution sequence of the procedure 1 to the procedure 3 is not limited in this application.

In the foregoing solution, when a location change of the terminal device causes a change of the serving charging function network element of the terminal device, the charging function network element (namely, the charging function network element that receives the charging request message from the charging trigger function network element) nearest to the terminal device obtains the charging data of the terminal device via the dedicated charging function network element, and provides the charging service for the terminal device. According to the foregoing solution, cross-area transmission of a large amount of charging information generated in the charging process can be reduced, to save the network resource, reduce the signaling network load and the operation costs, and improve cyber resilience. For example, when a network is divided into a plurality of areas (for example, the network is deployed based on provinces in China, one network crosses a plurality of countries in Europe, and an operator network covers a plurality of islands in a coastal country), a plurality of core networks and charging systems need to be deployed in the plurality of areas. If a home charging system is used to charge the terminal device, when the terminal device moves to an area outside a home area, a large amount of charging information (for example, information such as a call detail record) generated by the terminal device in real time needs to be routed to a dedicated charging system of the terminal device. Consequently, the signaling network load and the operation costs are increased. However, in the foregoing solution, the charging function network element (namely, the charging function network element that receives the charging request message) nearest to the terminal device is used to charge the terminal device, so that the network resource can be saved, and impact that is on user service use and that is caused when a charging network line is faulty can be reduced.

With reference to FIG. 5 to FIG. 13, the following describes charging methods 500 to 1300 provided in embodiments of this application. It may be understood that the method 500 to the method 1300 are several possible implementations in which the method 400 is applied to a 5G communication system. In the method 500 to the method 1300, an example in which a terminal device is a UE, a dedicated charging function network element is a dedicated CHF (dedicated CHF), a charging trigger function network element is an SMF or a MEC CTF, and a charging function network element is a CHF is used for description.

FIG. 5 is an example flowchart of a method 500 according to an embodiment of this application. In the method 500, it is assumed that a serving CHF of a UE is switched from a dedicated CHF to a CHF 1.

It should be noted that the method 500 is described by using an example in which the UE switches a PDU session in SSC mode 2 in an online charging scenario. The SSC mode 2 is a service and session continuity mode. In SSC mode 2, when a session anchor is changed, a connection between the UE and an old PDU session anchor is first released, and then a connection between the UE and a new PDU session anchor is established. In this process, a service is interrupted.

The following describes the method 500 by using an example with reference to steps in FIG. 5.

S501: The UE establishes a PDU session #1 with a UPF 1, and performs data transmission through the PDU session #1. A specific process is not limited in this application.

It may be understood that, in an establishment procedure for the PDU session #1, an SMF 1 triggers the dedicated CHF (dedicated CHF) to charge the UE. A specific process is not limited in this application.

S502: The SMF 1 determines to perform UPF handover.

For example, the SMF 1 determines that a UPF that serves the UE needs to be switched. The SMF 1 is an SMF that serves the PDU session #1 of the UE. For example, when the UPF 1 cannot serve the UE anymore because the UE moves or a signal between the UPF 1 and the UE is poor, the SMF 1 determines that the UPF that serves the UE needs to be handed over.

Optionally, S503: The SMF 1 sends a session management context status notification request message to an AMF. Accordingly, the AMF receives the session management context status notification request message from the SMF 1.

For example, when determining to hand over the UPF, the SMF 1 sends the session management context status notification request (Nsmf_PDUSession_SMContextStatusNotify Request) message to the AMF, where the session management context status notification request message indicates the AMF to release the PDU session #1.

Optionally, S504: The AMF sends a session management context status notification response message to the SMF 1. Accordingly, the SMF 1 receives the session management context status notification response message from the AMF.

For example, after receiving the session management context status notification request message from the SMF 1, the AMF returns the session management context status notification response (Nsmf_PDUSession_SMContextStatusNotify Response) message to the SMF 1.

S505: Perform a release procedure for the PDU session #1.

For example, the AMF triggers the release procedure for the PDU session #1, that is, triggers the UE to disconnect from the UPF 1, based on the session management context status notification request message. For a specific process, refer to an existing protocol. Details are not described herein.

S506: The SMF 1 sends a termination request message #1 to the dedicated CHF. Accordingly, the dedicated CHF receives the termination request message #1 from the SMF 1.

For example, after the PDU session #1 is released, the SMF 1 sends the termination request (termination request) message #1 to the dedicated CHF (dedicated CHF). The dedicated CHF is a network element that currently provides a charging service for the UE.

The termination request message #1 is for requesting to terminate a charging session corresponding to the PDU session #1, that is, release a charging resource that is between the SMF 1 and the dedicated CHF and that is for the PDU session #1.

S507: The dedicated CHF sends a termination response message to the SMF 1. Accordingly, the SMF 1 receives the termination response message from the dedicated CHF.

For example, after receiving the termination request message #1 from the SMF 1, the dedicated CHF releases the charging resource, and returns the termination response (termination response) message #1.

The termination response message #1 includes final usage of the PDU session #1, namely, usage of user traffic between a previous initial request (namely, a charging request) and the termination request message #1. In the online charging scenario, the usage of the user traffic is usage for a quota. In an offline charging scenario, the usage of the user traffic is usage of traffic obtained through statistics collection.

S508: Perform an establishment procedure for a PDU session #2 between the UE and a UPF 2.

For example, after the release procedure for the PDU session #1 is terminated, the UE triggers the establishment procedure for the PDU session #2 between the UE and the UPF 2. For a specific process, refer to the existing protocol. Details are not described herein.

S509: An SMF 2 sends an initial request message #1 to the CHF 1. Accordingly, the CHF 1 receives the initial request message #1 from the SMF 2.

For example, in the establishment procedure for the PDU session #2, for example, after receiving, from the AMF, a session management context creation request (Nsm_PDUSession_CreateSMContext Request) message for the PDU session #2, the SMF 2 sends the initial request (initial request) message #1 for the PDU session #2 to the CHF 1. The SMF 2 is an SMF that serves the PDU session #2, and the initial request message #1 is for requesting to charge the UE for the PDU session #2.

For specific implementations in which the SMF 2 sends the initial request message #1 to the CHF 1, refer to the implementations in which the charging trigger function network element #1 sends the charging request message #1 to the charging function network element #1 in S401 in the method 400. For example, the SMF 2 in S509 corresponds to the charging trigger function network element #1 in S401, the CHF 1 in S509 corresponds to the charging function network element #1 in S401, and the initial request message #1 in S509 corresponds to the charging request message #1 in S401. Details are not described herein again.

S510: The CHF 1 sends an initial request message #2 to the dedicated CHF. Accordingly, the dedicated CHF receives the initial request message #2 from the CHF 1.

S511: The dedicated CHF sends charging data to the CHF 1. Accordingly, the CHF 1 receives the charging data from the dedicated CHF.

For example, the CHF 1 sends the initial request message #2 to the dedicated CHF, to request to obtain the charging data of the UE. The dedicated CHF returns the charging data of the UE based on the request of the CHF 1. For a specific process, refer to S402b and S402c in the method 400. For example, the dedicated CHF and CHF 1 in S510 and S511 respectively correspond to the dedicated charging function network element and the charging function network element #1 in S402b and S402c, the initial request message #2 in S510 corresponds to the charging data request message #1 in S402b, and the charging data in S511 corresponds to the charging data #1 in S402c. Details are not described herein again.

S512: The CHF 1 charges the UE based on the charging data.

For example, after receiving the charging data from the dedicated CHF, the CHF 1 charges the UE based on the charging data. For a specific process, refer to S402 in the method 400. Details are not described herein again.

Optionally, subsequent charging interaction (for example, an update request message in a charging process) is performed between the SMF 2 and the CHF 1. A specific process is not limited in this application.

S513: The CHF 1 sends an initial response message to the SMF 2. Accordingly, the SMF 2 receives the initial response message from the CHF 1.

For example, after receiving the charging data from the dedicated CHF, the CHF 1 returns the initial response message to the SMF 2. The initial response message is for responding to the initial request message #1. It may be understood that a sequence of performing S512 and S513 is not limited in this application.

S514: The SMF 2 sends a termination request message #2 to the CHF 1. Accordingly, the CHF 1 receives the termination request message #2 from the SMF 2.

S515: The CHF 1 sends a termination response message #2 to the SMF 2. Accordingly, the SMF 2 receives the termination response message #2 from the CHF 1.

For example, after the PDU session #2 is released (not shown in the figure), the SMF 2 sends the termination request (termination request) message #2 to the CHF 1, to request to terminate a charging session corresponding to the PDU session #2, that is, release a charging resource that is between the SMF 2 and the CHF 1 and that is for the PDU session #2.

S516: The CHF 1 sends a charging result to the dedicated CHF. Accordingly, the dedicated CHF receives the charging result from the CHF 1.

S516 is similar to S403 in the method 400. Details are not described herein again.

According to the foregoing solution, when the serving CHF of the UE is changed due to a location change of the UE (for example, the serving CHF is switched from dedicated CHF to the CHF 1), the CHF 1 nearest to the UE obtains the charging data of the UE via the dedicated CHF, and provides the charging service for the UE. In this way, cross-area transmission of a large amount of charging information generated in the charging process can be reduced, to save a network resource and reduce operation costs.

FIG. 6 is an example flowchart of a method 600 according to an embodiment of this application. In the method 600, it is assumed that a serving CHF of a UE is switched from a CHF 1 to a CHF 2. In addition, the method 600 is described by using an example in which the UE switches a PDU session in SSC mode 2 in an online charging scenario.

It may be understood that the method 600 may be implemented independently, or may be implemented in combination with the method 500. For example, the method 600 may be a solution performed after the method 500.

The following describes the method 600 by using an example with reference to steps in FIG. 6.

S601: The UE establishes a PDU session #2 with a UPF 2, and performs data transmission through the PDU session #2. A specific process is not limited in this application.

It may be understood that, in an establishment process for the PDU session #2, an SMF 2 triggers the CHF 1 to charge the UE. A specific process is not limited in this application. If the method 600 is implemented in combination with the method 500, S601 may be corresponding to S508 to S513 in the method 500.

S602: An SMF 2 determines to perform UPF handover.

Optionally, S603: The SMF 2 sends a session management context status notification request message to an AMF.

Optionally, S604: The AMF sends a session management context status notification response message to the SMF 2.

S602 to S604 are similar to S502 to S504 in the method 500. Details are not described herein again.

S605: Perform a release procedure for the PDU session #2.

For example, the AMF triggers the release procedure for the PDU session #2, that is, triggers the UE to disconnect from the UPF 2, based on the session management context status notification request message. For a specific process, refer to an existing protocol. Details are not described herein.

S606: The SMF 2 sends a termination request message#1 to the CHF 1. Accordingly, the CHF 1 receives the termination request message#1 from the SMF 2.

For example, after the PDU session #2 is released, the SMF 2 sends the termination request (termination request) message #1 to the CHF 1. The CHF 1 is a network element that currently provides a charging service for the UE.

The termination request message #1 is for requesting to terminate a charging session corresponding to the PDU session #2, that is, release a charging resource that is between the SMF 2 and the CHF 1 and that is for the PDU session #2.

S607: The CHF 1 sends a termination response message #1 to the SMF 2. Accordingly, the SMF 2 receives the termination response message #1 from the CHF 1.

For example, after receiving the termination request message from the SMF 2, the CHF 1 releases the charging resource, and returns the termination response (termination response) message #1. The termination response message #1 includes final usage of the PDU session #2.

S608: The CHF 1 sends a charging result #1 to a dedicated CHF. Accordingly, the dedicated CHF receives the charging result #1 from the CHF 1.

S608 is similar to S403 in the method 400. Details are not described herein again. It may be understood that, if the method 600 is implemented in combination with the method 500, S608 may correspond to S514 in the method 500.

S609: Perform an establishment procedure for the PDU session #3 between the UE and the UPF 3.

For example, after the release procedure for the PDU session #2 is terminated, the UE triggers an establishment procedure for a PDU session #3 between the UE and a UPF 3. For a specific process, refer to the existing protocol. Details are not described herein.

S610: An SMF 3 sends an initial request message #1 to the CHF 2. Accordingly, the CHF 2 receives the initial request message #1 from the SMF 3.

For example, the SMF 3 sends the initial request (initial request) message #1 for the PDU session #3 to the CHF 2 in the establishment procedure for the PDU session #3. The SMF 3 is an SMF that serves the PDU session #3, and the initial request message #1 is for requesting to charge the UE for the PDU session #3.

S610 is similar to S404 in the method 400. For example, the SMF 3 in S610 corresponds to the charging trigger function network element #2 in S404, the CHF 2 in S610 corresponds to the charging function network element #2 in S404, and the initial request message #1 in S610 corresponds to the charging request message #2 in S404. A specific process is not described herein again.

S611: The CHF 2 sends an initial request message #2 to the dedicated CHF. Accordingly, the dedicated CHF receives the initial request message #2 from the CHF 2.

S612: The dedicated CHF sends charging data to the CHF 2. Accordingly, the CHF 2 receives the charging data from the dedicated CHF.

For example, the CHF 1 sends the initial request message #2 to the dedicated CHF, to request to obtain the charging data of the UE. The dedicated CHF returns the charging data of the UE based on the request of the CHF 1. For a specific process, refer to S405 and S406 in the method 400. For example, the dedicated CHF and the CHF 2 in S611 and S612 respectively correspond to the dedicated charging function network element and the charging function network element #2 in S402b and S402c, the initial request message #2 in S611 corresponds to the charging data request message #2 in S405, and the charging data in S612 corresponds to the charging data #2 in S406. Details are not described herein again.

S613: The CHF 2 charges the UE based on the charging data.

For example, after receiving the charging data from the dedicated CHF, the CHF 2 charges the UE based on the charging data. For a specific process, refer to S407 in the method 400. Details are not described herein again.

Optionally, subsequent charging interaction (for example, an update request message in a charging process or a termination request message for charging termination) is performed between the SMF 3 and the CHF 2. A specific process is not limited in this application.

S614: The CHF 2 sends an initial response message to the SMF 3. Accordingly, the SMF 3 receives the initial response message from the CHF 2.

For example, after receiving the charging data from the dedicated CHF, the CHF 2 returns the initial response message to the SMF 3. The initial response message is for responding to the initial request message #1. It may be understood that a sequence of performing S613 and S614 is not limited in this application.

S615: The SMF 3 sends a termination request message #2 to the CHF 2. Accordingly, the CHF 2 receives the termination request message #2 from the SMF 3.

S616: The CHF 2 sends a termination response message #2 to the SMF 3. Accordingly, the SMF 3 receives the termination response message #2 from the CHF 2.

For example, after the PDU session #3 is released (not shown in the figure), the SMF 3 sends the termination request (termination request) message #2 to the CHF 2, to request to terminate the charging session corresponding to the PDU session #3, that is, release a charging resource that is between the SMF 3 and the CHF 2 and that is for the PDU session #3.

S617: The CHF 2 sends a charging result #2 to the dedicated CHF. Accordingly, the dedicated CHF receives the charging result #2 from the CHF 2.

S617 is similar to S408 in the method 400. Details are not described herein again.

According to the foregoing solution, when the serving CHF of the UE is changed due to a location change of the UE (for example, the serving CHF is switched from the CHF 1 to the CHF 2), the CHF 2 nearest to the UE obtains the charging data of the UE via the dedicated CHF, and provides the charging service for the UE. In this way, cross-area transmission of a large amount of charging information generated in the charging process can be reduced, to save a network resource and reduce operation costs.

FIG. 7 is an example flowchart of a method 700 according to an embodiment of this application. In the method 700, it is assumed that a serving CHF of a UE is switched from a CHF 2 to a dedicated CHF. In addition, the method 700 is described by using an example in which the UE switches a PDU session in SSC mode 2 in an online charging scenario.

It may be understood that the method 700 may be implemented independently, or may be implemented in combination with the method 500 and/or the method 600. For example, the method 700 may be a solution performed after the method 600.

The following describes the method 700 by using an example with reference to steps in FIG. 7.

S701: The UE establishes a PDU session #3 with a UPF 3, and performs data transmission through the PDU session #3. A specific process is not limited in this application.

It may be understood that, in an establishment process for the PDU session #3, an SMF 3 triggers the CHF 2 to charge the UE. A specific process is not limited in this application. If the method 700 is implemented in combination with the method 600, S701 may correspond to S509 to S614 in the method 600.

S702: An SMF 3 determines to perform UPF handover.

Optionally, S703: The SMF 3 sends a session management context status notification request message to an AMF.

Optionally, S704: The AMF sends a session management context status notification response message to the SMF 3.

S702 to S704 are similar to S502 to S504 in the method 500. Details are not described herein again.

S705: Perform a release procedure for a PDU session #3.

For example, the AMF triggers a release procedure for the PDU session #3, that is, triggers the UE to disconnect from the UPF 3, based on the session management context status notification request message. For a specific process, refer to an existing protocol. Details are not described herein.

S706: The SMF 3 sends a termination request message to the CHF 2. Accordingly, the CHF 2 receives the termination request message from the SMF 3.

For example, after the PDU session #3 is released, the SMF 3 sends the termination request (termination request) message to the CHF 2. The CHF 2 is a network element that currently provides a charging service for the UE.

The termination request message is for requesting to terminate a charging session corresponding to the PDU session #3, that is, release a charging resource that is between the SMF 3 and the CHF 2 and that is for the PDU session #2.

S707: The CHF 2 sends a termination response message to the SMF 3. Accordingly, an SMF 3 receives the termination response message from a CHF 2.

For example, after receiving the termination request message from the SMF 3, the CHF 2 releases the charging resource, and returns the termination response (termination response) message. The termination response message includes final usage of the PDU session #3.

S708: The CHF 2 sends a charging result to the dedicated CHF. Accordingly, the dedicated CHF receives the charging result from the CHF 2.

S708 is similar to S403 in the method 400. Details are not described herein again. It may be understood that, if the method 700 is implemented in combination with the method 600, S708 may correspond to S615 in the method 600.

S709: Perform an establishment procedure for a PDU session #4 between the UE and a UPF 4.

For example, after a release procedure for the PDU session #4 is terminated, the UE triggers the establishment procedure for the PDU session #4 between the UE and the UPF 4. For a specific process, refer to the existing protocol. Details are not described herein.

S710: An SMF 4 sends an initial request message to the dedicated CHF. Accordingly, the dedicated CHF receives the initial request message from the SMF 4.

For example, the SMF 4 sends the initial request (initial request) message for the PDU session #4 to the dedicated CHF in the establishment procedure for the PDU session #4. The SMF 4 is an SMF that serves the PDU session #4, and the initial request message is for requesting to charge the UE for the PDU session #4.

S710 is similar to S409 in the method 400. For example, the SMF 4 in S710 corresponds to the charging trigger function network element #3 in S404, the dedicated CHF in S710 corresponds to the dedicated charging function network element in S404, and the initial request message in S710 corresponds to the charging request message #3 in S404. A specific process is not described herein again.

S711: The dedicated CHF charges the UE based on charging data.

S711 is similar to S410 in the method 400. For brevity, details are not described herein again.

S712: The dedicated CHF sends an initial response message to the SMF 4. Accordingly, the SMF 4 receives the initial response message from the dedicated CHF.

For example, the dedicated CHF returns the initial response message to the SMF 4. The initial response message is for responding to the initial request message. It may be understood that a sequence of performing S711 and S712 is not limited in this application.

According to the foregoing solution, when the serving CHF of the UE is changed due to a location change of the UE (for example, the serving CHF is switched from the CHF 2 to the dedicated CHF), the dedicated CHF provides the charging service for the UE based on the locally maintained charging data of the UE. In this way, cross-area transmission of a large amount of charging information generated in a charging process can be reduced, to save a network resource and reduce operation costs.

FIG. 8A and FIG. 8B are an example flowchart of a method 800 according to an embodiment of this application. In the method 800, it is assumed that a serving CHF of a UE is switched from a dedicated CHF to a CHF 1.

It should be noted that the method 800 is described by using an example in which the UE switches a PDU session in SSC mode 3 in an online charging scenario. The SSC mode 3 is a service and session continuity mode different from an SSC mode 2. In SSC mode 3, before a user plane is changed (that is, a session anchor is changed), a connection to a new PDU session anchor is first established, to ensure service continuity.

The following describes the method 800 by using an example with reference to steps in FIG. 8A and FIG. 8B.

S801: The UE establishes a PDU session #1 with a UPF 1, and performs data transmission through the PDU session #1. A specific process is not limited in this application.

S802: An SMF 1 determines to perform UPF/SMF handover.

Optionally, S803: The SMF 1 sends a session management context status notification request message to an AMF. Accordingly, the AMF receives the session management context status notification request message from the SMF 1.

Optionally, S804: The AMF sends a session management context status notification response message to the SMF 1. Accordingly, the SMF 1 receives the session management context status notification response message from the AMF.

S801 to S804 are similar to S501 to S504 in the method 500. For brevity, details are not described herein again.

S805: The SMF 1 sends an N1N2 message transfer request message to the AMF. Accordingly, the AMF receives the N1N2 message transfer request message from the SMF 1.

For example, the N1N2 message transfer (Namf_Communication_N1N2MessageTransfer) request message includes a PDU session ID, SMF relocation indication information, an N1 SM container, and the like. The PDU session ID is an identifier of the PDU session #1, and the SMF relocation indication information indicates whether to request to reallocate an SMF.

S806: The AMF sends an N1N2 message transfer response message to the SMF 1. Accordingly, the SMF 1 receives the N1N2 message transfer response message from the AMF. The N1N2 message transfer response message is for responding to the N1N2 message transfer request message.

S807: The AMF sends a PDU session modification command to the UE. Accordingly, the UE receives the PDU session modification command from the AMF.

For example, the PDU session modification command includes the information carried in the N1N2 message transfer request message.

S808: The UE sends a PDU session modification command acknowledgment message to the AMF. Accordingly, the AMF receives the PDU session modification command acknowledgment message from the UE. The PDU session modification command message acknowledgment message is for responding to the PDU session modification command.

S809: The AMF sends a session management context update request (Nsmf PDUSession UpdateSMContext Request) message to the SMF 1. Accordingly, the SMF 1 receives the session management context update request message from the AMF.

For example, the AMF sends, to the SMF1 via the session management context update request message, an N1 SM container received from a RAN.

S810: The SMF 1 sends a session management context update response (Nsmf PDUSession UpdateSMContext Response) message to the AMF. Accordingly, the AMF receives the session management context update response message from the SMF 1. The session management context update response message is for responding to the session management context update request message.

S811: Perform an establishment procedure for a PDU session #2 between the UE and a UPF 2.

For example, after receiving the PDU session modification command, the UE determines whether to trigger establishment of the PDU session #2 between the UE and the UPF 2. A specific process is not limited in this application.

S812: An SMF 2 sends an initial request message #1 to the CHF 1. Accordingly, the CHF 1 receives the initial request message #1 from the SMF 2.

S813: The CHF 1 sends an initial request message #2 to the dedicated CHF. Accordingly, the dedicated CHF receives the initial request message #2 from the CHF 1.

S814: The dedicated CHF sends charging data to the CHF 1. Accordingly, the CHF 1 receives the charging data from the dedicated CHF.

S815: The CHF 1 charges the UE based on the charging data.

S816: The CHF 1 sends an initial response message to the SMF 2. Accordingly, the SMF 2 receives the initial response message from the CHF 1.

It may be understood that S812 to S816 are similar to S509 to S513 in the method 500. Details are not described herein again.

S817: Perform a release procedure for the PDU session #1.

For example, after the establishment of the PDU session #2 is completed, the SMF 1 triggers the release procedure for the PDU session #1. A specific process is not limited in this application.

S818: The SMF 1 sends a termination request message #1 to the dedicated CHF. Accordingly, the dedicated CHF receives the termination request message #1 from the SMF 1.

For example, after the PDU session #1 is released, the SMF 1 sends the termination request (termination request) message #1 to the dedicated CHF (dedicated CHF). The dedicated CHF is a network element that provides a charging service for the UE before the CHF 1 serves as the serving CHF.

The termination request message #1 is for requesting to terminate a charging session corresponding to the PDU session #1, that is, release a charging resource that is between the SMF 1 and the dedicated CHF and that is for the PDU session #1.

S819: The dedicated CHF sends a termination response message #1 to the SMF 1. Accordingly, the SMF 1 receives the termination response message #1 from the dedicated CHF.

For example, after receiving the termination request message #1 from the SMF 1, the dedicated CHF releases the charging resource, and returns the termination response (termination response) message #1. The termination response message #1 includes final usage of the PDU session #1.

It may be understood that a sequence between S818 and S819 and S812 to S816 is not limited in this application.

S820: The SMF 2 sends a termination request message #2 to the CHF 1. Accordingly, the CHF 1 receives the termination request message #2 from the SMF 2.

S821: The CHF 1 sends a termination response message #2 to the SMF 2. Accordingly, the SMF 2 receives the termination response message #2 from the CHF 1.

For example, after the PDU session #2 is released (not shown in the figure), the SMF 1 sends the termination request (termination request) message #2 to the CHF 1, to request to terminate a charging session corresponding to the PDU session #2, that is, release a charging resource that is between the SMF 2 and the CHF 1 and that is for the PDU session #1.

S822: The CHF 1 sends a charging result to the dedicated CHF. Accordingly, the dedicated CHF receives the charging result from the CHF 1.

S822 is similar to S403 in the method 400. Details are not described herein again.

According to the foregoing solution, when the serving CHF of the UE is changed due to a location change of the UE (for example, the serving CHF is switched from dedicated CHF to the CHF 1), the CHF 1 nearest to the UE obtains the charging data of the UE via the dedicated CHF, and provides the charging service for the UE. In this way, cross-area transmission of a large amount of charging information generated in a charging process can be reduced, to save a network resource and reduce operation costs.

FIG. 9A and FIG. 9B are an example flowchart of a method 900 according to an embodiment of this application. In the method 900, it is assumed that a serving CHF of a UE is switched from a CHF 1 to a CHF 2. In addition, the method 900 is described by using an example in which the UE switches a PDU session in SSC mode 3 in an online charging scenario.

It may be understood that the method 900 may be implemented independently, or may be implemented in combination with the method 800. For example, the method 900 may be a solution performed after the method 800.

The following describes the method 900 by using an example with reference to steps in FIG. 9A and FIG. 9B.

It may be understood that S901 to S906 are similar to S801 to S806 in the method 800. For brevity, details are not described herein again.

Optionally, S907: An SMF 2 sends a termination request message #1 to the CHF 1. Accordingly, the CHF 1 receives the termination request message #1 from the SMF 2.

For example, after receiving an N1N2 message transfer response message #1 for a PDU session #2, the SMF 2 may send the termination request (termination request) message #1 to the CHF 1. The CHF 1 is a network element that currently provides a charging service for the UE. The termination request message #1 is for requesting to terminate a charging session corresponding to the PDU session #2, that is, release a charging resource that is between the SMF 2 and the CHF 1 and that is for the PDU session #2.

Optionally, S908: The CHF 1 sends a termination response message #1 to the SMF 2. Accordingly, the SMF 2 receives the termination response message #1 from the CHF 1.

Optionally, S909: The CHF 1 sends a charging result #1 to a dedicated CHF. Accordingly, the dedicated CHF receives the charging result #1 from the CHF 1.

For example, after performing charging processing on the UE, the CHF 1 may send the charging result #1 to the dedicated CHF. The charging result #1 refers to data obtained by performing charging processing on the terminal device by the charging function network element #1. For details, refer to the descriptions of S403 in the method 400. Details are not described herein again.

S910: An AMF sends a PDU session modification command to the UE. Accordingly, the UE receives the PDU session modification command from the AMF.

S911: The UE sends a PDU session modification command acknowledgment message to the AMF. Accordingly, the AMF receives the PDU session modification command acknowledgment message from the UE.

S912: The AMF sends a session management context update request message to an SMF 2. Accordingly, the SMF 2 receives the session management context update request message from the AMF.

S913: The SMF 1 sends a session management context update response message to the AMF. Accordingly, the AMF receives the session management context update response message from the SMF 1.

S914: Perform an establishment procedure for the PDU session #3 between the UE and a UPF 2.

It may be understood that S910 to S914 are similar to S807 to S811 in the method 800. For brevity, details are not described herein again.

S915: An SMF 3 sends an initial request message #1 to the CHF 2. Accordingly, the CHF 2 receives the initial request message #1 from the SMF 3.

S916: The CHF 2 sends an initial request message #2 to the dedicated CHF. Accordingly, the dedicated CHF receives the initial request message #2 from the CHF 2.

S917: The dedicated CHF sends charging data to the CHF 2. Accordingly, the CHF 2 receives the charging data from the dedicated CHF.

S918: The CHF 2 charges the UE based on the charging data.

S919: The CHF 2 sends an initial response message to the SMF 3. Accordingly, the SMF 3 receives the initial response message from the CHF 2.

It may be understood that S915 to S919 are similar to S610 to S614 in the method 600. Details are not described herein again.

S920: Perform a release procedure for the PDU session #2.

For example, after establishment of the PDU session #2 is completed, the SMF 2 triggers the release procedure for the PDU session #2. A specific process is not limited in this application.

S921: The SMF 2 sends a termination request message#2 to the CHF 1. Accordingly, the CHF 1 receives the termination request message#2 from the SMF 2.

For example, after the PDU session #2 is released, the SMF 2 sends the termination request (termination request) message#2 to the CHF 1. The CHF 1 is a network element that provides the charging service for the UE before the CHF 2.

The termination request message#2 is for requesting to terminate a charging session corresponding to the PDU session #2, that is, release a charging resource that is between the SMF 2 and the dedicated CHF and that is for the PDU session #2.

S922: The CHF 1 sends a termination response message#2 to the SMF 2. Accordingly, the SMF 2 receives the termination response message#2 from the CHF 1.

For example, after receiving the termination request message#2 from the SMF 2, the CHF 1 releases the charging resource, and returns the termination response (termination response) message. The termination response message includes final usage of the PDU session #2.

Optionally, S923: The CHF 1 sends a charging result #2 to the dedicated CHF. Accordingly, the dedicated CHF receives the charging result #2 from the CHF 1.

For example, if the CHF 1 further generates the new charging result #2 after S909, the CHF 1 sends the charging result #2 to the dedicated CHF.

Optionally, S924: The dedicated CHF sends updated charging data to the CHF 2. Accordingly, the CHF 2 receives the updated charging data from the dedicated CHF.

For example, after receiving the charging result #2 from the CHF1, the dedicated CHF determines whether the charging data needs to be updated to the CHF 2. When the charging data needs to be updated to the CHF 2, the dedicated CHF sends the updated charging data to the CHF 2. For details, refer to the example provided after S406 in the method 400. Details are not described herein again.

Optionally, S925: The CHF 2 charges the UE based on the updated charging data.

For example, if the CHF 2 receives the updated charging data from the dedicated CHF, the CHF 2 charges the UE based on the updated charging data.

S926: The SMF 3 sends a termination request message #3 to the CHF 2. Accordingly, the CHF 2 receives the termination request message #3 from the SMF 3.

S927: The CHF 2 sends a termination response message #2 to the SMF 3. Accordingly, the SMF 3 receives the termination response message #2 from the CHF 2.

For example, after a PDU session #3 is released (not shown in the figure), the SMF 3 sends the termination request (termination request) message #2 to the CHF 2, to request to terminate a charging session corresponding to the PDU session #3, that is, release a charging resource that is between the SMF 3 and the CHF 2 and that is for the PDU session #1.

S928: The CHF 2 sends a charging result #3 to the dedicated CHF. Accordingly, the dedicated CHF receives the charging result #3 from the CHF 2.

For example, S928 is similar to S408 in the method 400. Details are not described herein again.

According to the foregoing solution, when the serving CHF of the UE is changed due to a location change of the UE (for example, the serving CHF is switched from the CHF 1 to the CHF 2), the CHF 2 nearest to the UE obtains the charging data of the UE via the dedicated CHF, and provides the charging service for the UE. In this way, cross-area transmission of a large amount of charging information generated in a charging process can be reduced, to save a network resource and reduce operation costs.

FIG. 10A and FIG. 10B are an example flowchart of a method 1000 according to an embodiment of this application. In the method 1000, it is assumed that a serving CHF of a UE is switched from a CHF 2 to a dedicated CHF. In addition, the method 1000 is described by using an example in which the UE switches a PDU session in SSC mode 3 in an online charging scenario.

It may be understood that the method 1000 may be implemented independently, or may be implemented in combination with the method 800 and/or the method 900. For example, the method 1000 may be a solution performed after the method 900.

The following describes the method 1000 by using an example with reference to steps in FIG. 10A and FIG. 10B.

It may be understood that S1001 to S1006 are similar to S801 to S806 in the method 800. For brevity, details are not described herein again.

Optionally, S1007: An SMF 3 sends a termination request message #1 to the CHF 2. Accordingly, the CHF 2 receives the termination request message #1 from the SMF 3.

Optionally, S1008: The CHF 2 sends a termination response message #1 to the SMF 3. Accordingly, the SMF 3 receives the termination response message #1 from the CHF 2.

Optionally, S1009: The CHF 2 sends a charging result #1 to the dedicated CHF. Accordingly, the dedicated CHF receives the charging result #1 from the CHF 2.

It may be understood that S1007 to S1009 are similar to S907 to S909 in the method 900. For brevity, details are not described herein again.

S1010: An AMF sends a PDU session modification command to the UE. Accordingly, the UE receives the PDU session modification command from the AMF.

S1011: The UE sends a PDU session modification command acknowledgment message to the AMF. Accordingly, the AMF receives the PDU session modification command acknowledgment message from the UE.

S1012: The AMF sends a session management context update request message to the SMF 3. Accordingly, the SMF 3 receives the session management context update request message from the AMF.

S1013: The SMF 3 sends a session management context update response message to the AMF. Accordingly, the AMF receives the session management context update response message from the SMF 3.

S1014: Perform an establishment procedure for a PDU session #4 between the UE and a UPF 4.

It may be understood that S1010 to S1014 are similar to S807 to S811 in the method 800. For brevity, details are not described herein again.

S1015: The SMF 4 sends an initial request message #1 to the dedicated CHF. Accordingly, the CHF 2 receives the initial request message #1 from an SMF 2.

S1016: The dedicated CHF charges the UE based on charging data.

S1017: The dedicated CHF sends an initial response message to an SMF 4. Accordingly, the SMF 4 receives the initial response message from the dedicated CHF.

It may be understood that S1015 to S1017 are similar to S710 to S712 in the method 700. Details are not described herein again.

S1018: Perform a release procedure for a PDU session #3.

S1019: The SMF 3 sends a termination request message #2 to the CHF 2. Accordingly, the CHF 2 receives the termination request message #2 from the SMF 3.

S1020: The CHF 2 sends a termination response message #2 to the SMF 3. Accordingly, the SMF 3 receives the termination response message #2 from the CHF 2.

S1018 to S1020 are similar to S920 to S922 in the method 900. Details are not described herein again.

Optionally, S1021: The CHF 2 sends a charging result #2 to the dedicated CHF. Accordingly, the dedicated CHF receives the charging result #2 from the CHF 2.

For example, if the CHF 2 further generates the new charging result #2 after S1009, the CHF 2 sends the charging result #2 to the dedicated CHF.

Optionally, S1022: The dedicated CHF charges the UE based on updated charging data.

For example, if the dedicated CHF receives the charging result #2 from the CHF 2, the dedicated CHF determines the updated charging data based on the charging result #2, and charges the UE based on the updated charging data.

According to the foregoing solution, when the serving CHF of the UE is changed due to a location change of the UE (for example, the serving CHF is switched from the CHF 2 to the dedicated CHF), the dedicated CHF provides a charging service for the UE based on the locally maintained charging data of the UE. In this way, cross-area transmission of a large amount of charging information generated in a charging process can be reduced, to save a network resource and reduce operation costs.

FIG. 11 is an example flowchart of a method 1100 according to an embodiment of this application.

It should be noted that the method 1100 is described by using an example in which a UE is charged in a process in which the UE registers with a network via an AMF in an offline charging scenario.

The following describes the method 1100 by using an example with reference to steps in FIG. 11.

S1101: The UE sends a registration request message to a RAN. Accordingly, the RAN receives the registration request message from the UE.

S1102: The RAN performs AMF selection.

S1103: The RAN sends the registration request message to an AMF 1. Accordingly, the AMF 1 receives the registration request message from the UE.

For example, because the UE moves, the UE is triggered to send the registration request (registration request) message to the RAN. After receiving the registration request message from the UE, the RAN selects an AMF (denoted as the AMF 1) that serves the UE, and then the RAN routes the received registration request message to the AMF 1.

Optionally, S1104: The AMF 1 sends a UE context transfer request message to an AMF 2. Accordingly, the AMF 2 receives the UE context transfer request message from the AMF 1.

For example, after receiving the registration request message, the AMF 1 determines, based on a GUTI carried in the registration request message, an AMF (denoted as the AMF 2) that serves the UE last time. Then, the AMF 1 sends the UE context transfer (Namf_Communication_UEContextTransfer) request message to the AMF 2, to request to obtain context information of the UE. The UE context transfer request message includes an identifier of the UE.

S1105: The AMF 2 sends a UE context transmission response message to the AMF 1. Accordingly, the AMF 1 receives the UE context transfer response message from the AMF 2.

For example, after receiving the UE context transfer request message from the AMF 1, the AMF 2 obtains the UE context information of the UE from a database based on the identifier of the UE, and then sends the context information of the UE to the AMF 1 via the UE context transfer response message.

It may be understood that S1101 to S1105 merely describe some steps in the UE registration procedure by using an example. For a detailed process, refer to an existing protocol. Details are not described herein.

S1106: The AMF 1 sends an initial request message #1 to a CHF 1. Accordingly, the CHF 1 receives the initial request message #1 from the AMF 1.

For example, in the UE registration procedure, for example, after receiving the UE context transfer response message, the AMF 1 sends the initial request message #1 to the CHF 1, where the initial request message #1 is for requesting to charge the UE.

It may be understood that, for specific implementations in which the AMF 1 sends the initial request message #1 to the CHF 1, refer to the implementations in which the charging trigger function network element #1 sends the charging request message #1 to the charging function network element #1 in S401 in the method 400. For example, the AMF 1 in S1106 corresponds to the charging trigger function network element #1 in S401, the CHF 1 in S1106 corresponds to the charging function network element #1 in S401, and the initial request message #1 in S1106 corresponds to the charging request message #1 in S401. Details are not described herein again.

It may be understood that A network element that provides A charging service for the UE before the CHF 1 may be the CHF 1, or may be another CHF like a CHF 2 or a dedicated CHF. This is not limited in this application.

Optionally, S1107: The CHF 1 sends an initial request message #2 to the dedicated CHF. Accordingly, the dedicated CHF receives the initial request message #2 from the CHF 1.

Optionally, S1108: The dedicated CHF sends charging data to the CHF 1. Accordingly, the CHF 1 receives the charging data from the dedicated CHF.

For example, when there is no charging data in local storage of the CHF 1, the CHF 1 sends the initial request message #2 to the dedicated CHF, to request to obtain the charging data of the UE. The dedicated CHF returns the charging data of the UE based on the request of the CHF 1. For a specific process, refer to S402b and S402c in the method 400. For example, the dedicated CHF and CHF 1 in S1107 and S1108 respectively correspond to the dedicated charging function network element and the charging function network element #1 in S402b and S402c, the initial request message #2 in S1107 corresponds to the charging data request message #1 in S402b, and the charging data in S1108 corresponds to the charging data #1 in S402c. Details are not described herein again.

S1109: The CHF 1 charges the UE based on the charging data.

For example, after obtaining the charging data of the UE, the CHF 1 charges the UE based on the charging data. For a specific process, refer to S402 in the method 400. Details are not described herein again.

Optionally, subsequent charging interaction (for example, an update request message in a charging process or a termination request message for charging termination) is performed between the AMF 1 and the CHF 1. A specific process is not limited in this application.

S1110: The CHF 1 sends an initial response message to the AMF 1. Accordingly, the AMF 1 receives the initial response message from the CHF 1.

For example, after receiving the charging data from the dedicated CHF, the CHF 1 returns an initial response message to the AMF 1. The initial response message is for responding to the initial request message #1. It may be understood that a sequence of performing S1109 and S1110 is not limited in this application.

S1111: The AMF 1 sends a termination request message to the CHF 1. Accordingly, the CHF 1 receives the termination request message from the AMF 1.

S1112: The CHF 1 sends a termination response message #2 to an AMF1. Accordingly, the AMF1 receives the termination response message #2 from the CHF 1.

For example, after a PDU session of the UE is released (not shown in the figure), the AMF 1 sends the termination request (termination request) message to the CHF 1, to request to terminate a charging session, that is, release a charging resource between the AMF1 and the CHF 1.

S1113: The CHF 1 sends a charging result to the dedicated CHF. Accordingly, the dedicated CHF receives the charging result from the CHF 1.

S1113 is similar to S403 in the method 400. Details are not described herein again.

According to the foregoing solution, when a serving CHF of the UE is changed due to a location change of the UE (for example, the serving CHF is switched from dedicated CHF to the CHF 1), in the registration procedure of the UE, the AMF triggers the CHF 1 nearest to the UE to obtain the charging data of the UE via the dedicated CHF and provide the charging service for the UE. In this way, cross-area transmission of a large amount of charging information generated in the charging process can be reduced, to save a network resource and reduce operation costs.

The solutions provided in embodiments of this application may alternatively be applied to an MEC scenario. For example, when a user accesses a MEC service, if a CHF of a UE is changed, the solution shown in the method 400 may be performed to charge the UE. With reference to FIG. 12 and FIG. 13, the following describes two solutions for charging the UE in the MEC scenario.

It should be noted that, in the method 1200 in FIG. 12 and the method 1300 in FIG. 13, both a MEC 1 CTF and a MEC 2 CTF are CTFs in MEC scenarios, where the MEC 2 CTF is a CTF that serves the UE before the MEC 1 CTF; and both a CHF 1 and a CHF 2 are network elements that provide a charging service for the UE, where the CHF 2 provides the charging service for the UE after the CHF 1. In other words, in the method 1200 and the method 1300, a serving CHF of the UE is switched from the CHF 1 to the CHF 2.

The method 1200 and the method 1300 are two possible implementations in which the procedure 1 and the procedure 2 in the method 400 are applied to the MEC scenario. In the method 1200 and the method 1300, an example in which a dedicated charging function network element is a dedicated CHF (dedicated CHF), a charging trigger function network element #1 is the MEC 1 CTF, a charging trigger function network element #2 is the MEC 2 CTF, a charging function network element #1 is the CHF 1, and a charging function network element #2 is the CHF 2 is used for description.

FIG. 12 is an example flowchart of a method 1200 according to an embodiment of this application. In the method 1200, a charging session between a MEC 1 CTF and a CHF 1 is first terminated, and then a charging session between a MEC 2 CTF and a CHF 2 is established. The following describes the method 1200 by using an example with reference to steps in FIG. 12.

S1201: The MEC 1 CTF sends an initial request message #1 to the CHF 1. Accordingly, the CHF 1 receives the initial request message #1 from the MEC 1 CTF.

For example, after a service of a user in MEC 1 is started, the MEC 1 CTF sends the initial request message #1 to the CHF 1, to request the CHF 1 to charge for the service of a UE in the MEC 1.

For a specific process, refer to the descriptions of S401 in the method 400. The MEC 1 CTF in S1201 may correspond to the charging trigger function network element #1 in S401, and the CHF 1 in S1201 may correspond to the charging function network element #1 in S401. Details are not described herein again.

Optionally, S1202: The CHF 1 sends an initial request message #2 to a dedicated CHF. Accordingly, the dedicated CHF receives the charging request message #2 from the CHF 1.

For example, when there is no charging data of the UE in local storage of the CHF 1, the CHF 1 sends the initial request message #2 to the dedicated CHF. For a specific process, refer to the descriptions of S402b in the method 400. The initial request message #2 in S1202 may correspond to the charging data request message #1 in S402b. Details are not described herein again.

Optionally, S1203: The dedicated CHF sends charging data #1 to the CHF 1. Accordingly, the CHF 1 receives the charging data #1 from the dedicated CHF.

For example, after receiving the initial request message #2 from the CHF 1, the dedicated CHF queries for the charging data #1 of the UE locally, and then sends the charging data #1 to the CHF 1. For a specific process, refer to the descriptions of S402c in the method 400. Details are not described herein again.

S1204: The CHF 1 performs charging processing on the UE based on the charging data #1.

For example, after obtaining the charging data of the UE, the CHF 1 performs charging processing on the UE. For a specific process, refer to the descriptions of S402 in the method 400. Details are not described herein again.

S1205: The CHF 1 sends an initial response message #1 to the MEC 1 CTF. Accordingly, the MEC 1 CTF receives the initial response message #1 from the CHF 1.

S1206: The MEC 1 CTF sends a termination request message #1 to the CHF 1. Accordingly, the CHF 1 receives the termination request message #1 from the MEC 1 CTF.

For example, the MEC 1 CTF sends the termination request (termination request) message #1 to the CHF 1, to request to terminate a charging resource that is of the MEC service of the user and that is between the MEC 1 and the CHF 1 and terminate a charging request.

S1207: The CHF 1 sends a termination response message #1 to the MEC 1 CTF. Accordingly, the MEC 1 CTF receives the termination response message #1 from the CHF 1.

For example, the MEC 1 CTF sends the termination request message #1 to the CHF 1, to request to release the charging resource that is of the MEC service and that is between the MEC 1 CTF and the CHF 1. After receiving the termination request message #1 from an SMF 1, the CHF 1 releases the charging resource, and returns the termination response (termination response) message #1.

S1208: The CHF 1 sends a charging result #1 to the dedicated CHF. Accordingly, the dedicated CHF receives the charging result #1 from the CHF 1.

S1208 is similar to S403 in the method 400. Details are not described herein again.

S1209: The MEC 2 CTF sends an initial request message #3 to the CHF 2. Accordingly, the CHF 2 receives the initial request message #3 from the MEC 2 CTF.

For example, according to a service session switching method implemented in MEC or a switching mode configured in the MEC, after the charging session between the MEC 1 CTF and the CHF 1 is terminated, and after a service of the user in MEC 2 is started, the MEC 2 CTF sends the initial request message #3 to the CHF 2, to request the CHF 2 to charge for the service of the UE in the MEC 2.

For a specific implementation, refer to the descriptions of S404 in the method 400. The initial request message #3 in S1209 may correspond to the charging request message #2 in S404. Details are not described herein again.

S1210: The CHF 2 sends an initial request message #4 to the dedicated CHF. Accordingly, the dedicated CHF receives the initial request message #4 from the CHF 2.

For example, after receiving the initial request message #3 from the CHF 1, the CHF 2 sends the initial request message #4 to the dedicated CHF, to request to obtain charging data #2 of the UE. For a specific process, refer to the descriptions of S405 in the method 400. The initial request message #4 in S1210 may correspond to the charging data request message #2 in S405. Details are not described herein again.

S1211: The dedicated CHF sends the charging data #2 to the CHF 2. Accordingly, the CHF 2 receives the charging data #2 from the dedicated CHF.

For example, after receiving the initial request message #4 from the CHF 2, the dedicated CHF queries for the charging data #2 of the UE locally, and then sends the charging data #2 to the CHF 2. For a specific process, refer to the descriptions of S406 in the method 400. Details are not described herein again.

S1212: The CHF 2 performs charging processing on the UE based on the charging data #2.

For example, after obtaining the charging data#2 of the UE, the CHF 2 performs charging processing on the UE. For a specific process, refer to the descriptions of S407 in the method 400. Details are not described herein again.

S1213: The CHF 2 sends an initial response message #1 to the MEC 2 CTF. Accordingly, the MEC 2 CTF receives the initial response message #1 from the CHF 2.

S1214: The MEC 2 CTF sends a termination request message #2 to the CHF 2. Accordingly, the CHF 2 receives the termination request message #2 from the MEC 2 CTF.

S1215: The CHF 2 sends a termination response message #2 to the MEC 2 CTF. Accordingly, the MEC 2 CTF receives the termination response message #2 from the CHF 2.

S1216: The CHF 2 sends a charging result #2 to the dedicated CHF. Accordingly, the dedicated CHF receives the charging result #2 from the CHF 2.

It may be understood that S1216 is similar to S408 in the method 400. For brevity, details are not described herein again.

According to the foregoing solution, in a MEC scenario, when a serving CHF of the UE is changed due to a location change of the UE, a MEC CTF triggers a CHF nearest to the UE to provide a charging service for the UE, and the CHF nearest to the UE obtains the charging data of the user via the dedicated CHF, and performs charging processing on the UE based on the charging data. In this way, cross-area transmission of a large amount of charging information generated in a charging process can be reduced, to save a network resource and reduce operation costs.

FIG. 13 is an example flowchart of a method 1300 according to an embodiment of this application. In the method 1300, charging between a MEC 2 CTF and a CHF 2 is first established, and then charging between a MEC 1 CTF and a CHF 1 is terminated. The following describes the method 1300 by using an example with reference to steps in FIG. 13.

It may be understood that S1301 to S1305 are similar to S1201 to S1205 in the method 1200. For brevity, details are not described herein again.

S1306: The MEC 2 CTF sends an initial request message #3 to the CHF 2. Accordingly, the CHF 2 receives the initial request message #3 from the MEC 1 CTF.

For example, after a service of a user in MEC 2 is started, the MEC 2 CTF sends the initial request message #3 to the CHF 2, to request the CHF 2 to charge for the service of a UE in the MEC 2. For a specific implementation, refer to the descriptions of S404 in the method 400. The initial request message #3 in S1306 may correspond to the charging request message #2 in S404. Details are not described herein again.

It may be understood that, when S1306 is performed, the charging between the MEC 1 CTF and the CHF 1 has not been terminated.

S1307 to S1310 are similar to S1210 to S1213 in the method 1200. Details are not described herein again.

S1311: The MEC 1 CTF sends a termination request message #1 to the CHF 1. Accordingly, the CHF 1 receives the termination request message #1 from the MEC 1 CTF.

For example, after the establishment of the charging between the MEC 2 CTF and the CHF 2 is completed, the MEC 1 CTF sends the termination request (termination request) message to the CHF 1, to request to terminate a charging resource that is of the MEC service of the user and that is between the MEC 1 and the CHF 1 and terminate a charging request.

It may be understood that whether an occasion on which the MEC 2 CTF sends the initial request message #3 to the CHF 2 is before or after a charging session between the MEC 1 CTF and the CHF 1 is terminated depends on an occasion of service session switching of the user on a network side.

S1312: The CHF 1 sends a termination response message #1 to the MEC 1 CTF. Accordingly, the MEC 1 CTF receives the termination response message #1 from the CHF 1.

S1313: The CHF 1 sends a charging result #1 to a dedicated CHF. Accordingly, the dedicated CHF receives the charging result #1 from the CHF 1.

S1313 is similar to S403 in the method 400. Details are not described herein again.

S1314 to S1316 are similar to S1214 to S1216 in the method 1200. For brevity, details are not described herein again.

According to the foregoing solution, in a MEC scenario, when a serving CHF of the UE is changed due to a location change of the UE, a MEC CTF triggers a CHF nearest to the UE to provide a charging service for the UE, and the CHF nearest to the UE obtains charging data of the user via the dedicated CHF, and performs charging processing on the UE based on the charging data. In this way, cross-area transmission of a large amount of charging information generated in a charging process can be reduced, to save a network resource and reduce operation costs.

In correspondence to the methods provided in the foregoing method embodiments, embodiments of this application further provide corresponding apparatuses. The apparatuses include corresponding modules configured to perform the foregoing method embodiments. The module may be software, hardware, or a combination of the software and the hardware. It may be understood that technical features described in the foregoing method embodiments are also applicable to the following apparatus embodiments. Therefore, for content that is not described in detail, refer to the foregoing method embodiments. For brevity, details are not described herein again.

FIG. 14 is a schematic block diagram of a communication apparatus 10 according to an embodiment of this application. The apparatus 10 includes a transceiver module 11 and/or a processing module 12. The transceiver module 11 may implement a corresponding communication function. The processing module 12 is configured to perform data processing. In other words, the transceiver module 11 is configured to perform operations related to receiving and sending. The processing module 12 is configured to perform an operation other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement an action of the device or the network element in the foregoing method embodiments.

In a first design, the apparatus 10 may correspond to the charging function network element (for example, the charging function network elements in FIG. 4A and FIG. 4B, or the CHF 1 or the CHF 2 in FIG. 5 to FIG. 13) in the foregoing method embodiments or a component (for example, a chip) of the charging function network element.

The apparatus 10 may implement corresponding steps or procedures performed by the charging function network element in the foregoing method embodiments. The transceiver module 11 may be configured to perform operations related to receiving and sending of the charging function network element in the foregoing method embodiments. The processing module 12 may be configured to perform a processing-related operation of the charging function network element in the foregoing method embodiments.

In a possible implementation, the transceiver module 11 is configured to receive a charging request message from a charging trigger function network element, where the charging request message is for requesting to charge a terminal device. The processing module 12 is configured to perform charging processing on the terminal device based on charging data of the terminal device, where the charging data is received by the charging apparatus from a dedicated charging function network element, and the dedicated charging function network element is a charging system that persistently stores user data of the terminal device.

In a second design, the apparatus 10 may correspond to the dedicated charging function network element (for example, the dedicated charging function network element in FIG. 4A and FIG. 4B, or the dedicated CHF in FIG. 5 to FIG. 13) in the foregoing method embodiments or a component (for example, a chip) of the dedicated charging function network element.

The apparatus 10 may implement corresponding steps or procedures performed by the dedicated charging function network element in the foregoing method embodiments. The transceiver module 11 may be configured to perform operations related to receiving and sending of the dedicated charging function network element in the foregoing method embodiments. The processing module 12 may be configured to perform a processing-related operation of the dedicated charging function network element in the foregoing method embodiments.

In a possible implementation, the transceiver module 11 is configured to: receive a charging data request message from a charging function network element, where the charging data request message is for requesting to obtain charging data of a terminal device, and the dedicated charging function network element is a charging system that persistently stores user data of the terminal device; and send the charging data to the charging function network element, where the charging data is for performing charging processing on the terminal device.

In a third design, the apparatus 10 may correspond to the charging trigger function network element (for example, the charging trigger function network elements in FIG. 4A and FIG. 4B, the SMFs in FIG. 5 to FIG. 10B (for example, the SMF 1 and the SMF 2 in FIG. 5 or FIG. 8A and FIG. 8B, the SMF 2 and the SMF 3 in FIG. 6 or FIG. 9A and FIG. 9B, and the SMF 3 and the SMF 4 in FIG. 7 or FIG. 10A and FIG. 10B), the AMFs (including the AMF 1 and the AMF 2) in FIG. 11, or the MEC CTFs (including the MEC 1 CTF and the MEC 2 CTF) in FIG. 12 or FIG. 13) in the foregoing method embodiments or a component (for example, a chip) of the charging trigger function network element.

The apparatus 10 may implement corresponding steps or procedures performed by the charging trigger function network element in the foregoing method embodiments. The transceiver module 11 may be configured to perform operations related to receiving and sending of the charging trigger function network element in the foregoing method embodiments. The processing module 12 may be configured to perform a processing-related operation of the charging trigger function network element in the foregoing method embodiments.

In a possible implementation, the processing module 12 is configured to obtain address information of a charging function network element based on information about the charging trigger function network element and/or location information of a terminal device. The transceiver module 11 is configured to send a charging request message to the charging function network element, where the charging request message is for requesting the charging function network element to charge the terminal device.

It should be understood that a specific process in which the modules perform the foregoing corresponding steps has been described in detail in the foregoing method embodiments. For brevity, details are not described herein again.

It should be further understood that the apparatus 10 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the charging function network element in the foregoing embodiments, and may be configured to perform procedures and/or steps corresponding to the charging function network element in the foregoing method embodiments. Alternatively, the apparatus 10 may be specifically the charging trigger function network element in the foregoing embodiments, and may be configured to perform procedures and/or steps corresponding to the charging trigger function network element in the foregoing method embodiments. To avoid repetition, details are not described herein again.

The apparatus 10 in the foregoing solutions has a function of implementing corresponding steps performed by the device (for example, the charging function network element or the charging trigger function network element) in the foregoing method. The function may be implemented by using hardware, or may be implemented by the hardware executing corresponding software. The hardware or the software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to respectively perform receiving and sending operations and a related processing operation in the method embodiments.

In addition, the transceiver module 11 may alternatively be a transceiver circuit (for example, the transceiver circuit may include a receiver circuit and a transmitter circuit), and the processing module may be a processing circuit.

FIG. 15 is a diagram of another communication apparatus 20 according to an embodiment of this application. The apparatus 20 includes a processor 21. The processor 21 is configured to perform a processing-related operation in the foregoing method embodiments. Optionally, there are one or more processors 21. The apparatus 20 further includes a transceiver 22, and the transceiver 22 is configured to receive a signal and/or send a signal. For example, the processor 21 is configured to control the transceiver 22 to receive the signal and/or send the signal. Optionally, there are one or more transceivers 22.

Optionally, as shown in FIG. 15, the apparatus 20 further includes a memory 23, and the memory 23 is configured to store a computer program or instructions and/or data. The memory 23 and the processor 21 may be integrated, or may be disposed separately. The processor 21 may read the computer program or the instructions stored in the memory 22, to perform the methods in the foregoing method embodiments. Optionally, there are one or more memories 23.

In a solution, the apparatus 20 is configured to implement operations performed by the charging function network element in the foregoing method embodiments.

In another solution, the apparatus 20 is configured to implement operations performed by the charging trigger function network element in the foregoing method embodiments.

It should be understood that, the processor mentioned in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is the general-purpose processor, the DSP, the ASIC, the FPGA or the another programmable logic device, the discrete gate or the transistor logic device, or the discrete hardware component, the memory (a storage module) may be integrated into the processor.

It should be further noted that the memory in this specification is intended to include, but is not limited to, these memories and any other suitable type of memory.

FIG. 16 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the charging function network element in the foregoing method embodiments.

For example, the logic circuit 31 is configured to implement a processing-related operation performed by the charging function network element in the foregoing method embodiments, for example, a processing-related operation performed by the charging function network element in the embodiment shown in FIG. 4A and FIG. 4B or the CHFs in FIG. 5 to FIG. 13. The input/output interface 32 is configured to implement an operation related to sending and/or receiving performed by the charging function network element in the foregoing method embodiments, for example, an operation related to sending and/or receiving performed by the charging function network element in the embodiment shown in FIG. 4A and FIG. 4B or the CHFs in FIG. 5 to FIG. 13.

In another solution, the chip system 30 is configured to implement operations performed by the dedicated charging function network element in the foregoing method embodiments.

For example, the logic circuit 31 is configured to implement a processing-related operation performed by the dedicated charging function network element in the foregoing method embodiments, for example, a processing-related operation performed by the dedicated charging function network element in the embodiment shown in FIG. 4A and FIG. 4B or the dedicated CHF in FIG. 5 to FIG. 13. The input/output interface 32 is configured to implement an operation related to sending and/or receiving performed by the charging function network element in the foregoing method embodiments, for example, an operation related to sending and/or receiving performed by the charging function network element in the embodiment shown in FIG. 4A and FIG. 4B or the dedicated CHF in FIG. 5 to FIG. 13.

In still another solution, the chip system 30 is configured to implement operations performed by the charging trigger function network element in the foregoing method embodiments.

For example, the logic circuit 31 is configured to implement a processing-related operation performed by the charging trigger function network element in the foregoing method embodiments, for example, a processing-related operation performed by the charging trigger function network element in the embodiment shown in FIG. 4A and FIG. 4B, the SMFs in FIG. 5 to FIG. 10B, the AMFs in FIG. 11 to FIG. 13, or the MEC CTFs in FIG. 14 to FIG. 16. The input/output interface 32 is configured to implement an operation related to sending and/or receiving performed by the charging trigger function network element in the foregoing method embodiments, for example, an operation related to sending and/or receiving performed by the charging trigger function network element in the embodiment shown in FIG. 4A and FIG. 4B, the SMFs in FIG. 5 to FIG. 10B, the AMFs in FIG. 11 to FIG. 13, or the MEC CTFs in FIG. 14 to FIG. 16.

An embodiment of this application further provides a computer-readable storage medium. The computer-readable storage medium stores computer instructions for implementing the methods performed by the device in the foregoing method embodiments.

For example, when a computer program is executed by a computer, the computer is enabled to implement the methods performed by the charging function network element in the foregoing method embodiments.

For another example, when a computer program is executed by a computer, the computer is enabled to implement the methods performed by the charging trigger function network element in the foregoing method embodiments.

An embodiment of this application further provides a computer program product, including instructions. When the instructions are executed by a computer, the methods performed by the device (for example, the charging function network element or the charging trigger function network element) in the foregoing method embodiments are implemented.

An embodiment of this application further provides a communication system, including the foregoing charging function network element and the foregoing charging trigger function network element.

For explanations and beneficial effects of related content of any one of the apparatuses provided above, refer to the corresponding method embodiment provided above. Details are not described herein again.

In the several embodiments provided in this application, it should be understood that the disclosed apparatuses and methods may be implemented in other manners. For example, the foregoing apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, or a charging trigger function network element. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging method, comprising:
receiving, by a charging function network element, a charging request message from a charging trigger function network element, wherein the charging request message is for requesting to charge a terminal device; and
performing, by the charging function network element, charging processing on the terminal device based on charging data of the terminal device, wherein the charging data is received by the charging function network element from a dedicated charging function network element, and the dedicated charging function network element is a charging system that persistently stores user data of the terminal device.

2. The method according to claim 1, wherein before the performing, by the charging function network element, charging processing on the terminal device based on charging data of the terminal device, the method further comprises:
sending, by the charging function network element, a charging data request message to the dedicated charging function network element; and
receiving, by the charging function network element, the charging data from the dedicated charging function network element.

3. The method according to claim 2, wherein the sending, by the charging function network element, a charging data request message to the dedicated charging function network element comprises:
sending, by the charging function network element, the charging data request message to the dedicated charging function network element when determining that there is no charging data in local storage.

4. The method according to claim 2 or 3, wherein the method further comprises:
obtaining, by the charging function network element, address information of the dedicated charging function network element; and
the sending, by the charging function network element, a charging data request message to the dedicated charging function network element comprises:
sending, by the charging function network element, the charging data request message to the dedicated charging function network element based on the address information.

5. The method according to claim 4, wherein the obtaining, by the charging function network element, address information of the dedicated charging function network element comprises:
sending, by the charging function network element, a query request message to a network repository function network element, wherein the query request message comprises an identifier of the terminal device, and the query request message is for requesting to query for the dedicated charging function network element corresponding to the terminal device; and
receiving, by the charging function network element, the address information of the dedicated charging function network element from the network repository function network element.

6. The method according to claim 4, wherein the obtaining, by the charging function network element, address information of the dedicated charging function network element comprises:
obtaining, by the charging function network element, the address information of the dedicated charging function network element from the charging request message.

7. The method according to any one of claims 1 to 6, wherein after the performing, by the charging function network element, charging processing on the terminal device based on charging data of the terminal device, the method further comprises:
sending, by the charging function network element, a charging result to the dedicated charging function network element, wherein the charging result is data obtained by performing charging processing on the terminal device by the charging function network element.

8. A charging method, comprising:
receiving, by a dedicated charging function network element, a charging data request message from a charging function network element, wherein the charging data request message is for requesting to obtain charging data of a terminal device, and the dedicated charging function network element is a charging system that persistently stores user data of the terminal device; and
sending, by the dedicated charging function network element, the charging data to the charging function network element in response to the charging data request message, wherein the charging data is for performing charging processing on the terminal device.

9. The method according to claim 8, wherein after the sending, by the dedicated charging function network element, the charging data of the terminal device to the charging function network element, the method further comprises:
receiving, by the dedicated charging function network element, a first charging result from another charging function network element, wherein the first charging result is data obtained by performing charging processing on the terminal device by the another charging function network element, and the another charging function network element is a network element that provides a charging service for the terminal device before the charging function network element;
determining, by the dedicated charging function network element based on the first charging result, whether the charging data of the terminal device needs to be updated to the charging function network element; and
when the charging data of the terminal device needs to be updated to the charging function network element, sending, by the dedicated charging function network element, updated charging data to the charging function network element.

10. The method according to claim 9, wherein the method further comprises:
recording, by the dedicated charging function network element, that the charging function network element is a network element that currently provides the charging service for the terminal device.

11. The method according to claim 10, wherein the method further comprises:
receiving, by the dedicated charging function network element, a query request message, wherein the query request message comprises an identifier of the terminal device, and the query request message is for requesting to query for the network element that currently provides the charging service for the terminal device; and
returning, by the dedicated charging function network element, address information of the charging function network element based on the recording.

12. The method according to any one of claims 9 to 11, wherein the method further comprises:
receiving, by the dedicated charging function network element, a charging result from the charging function network element, wherein the charging result is data obtained by performing charging processing on the terminal device by the charging function network element; and
updating, by the dedicated charging function network element, the charging data based on the charging result.

13. A charging method, comprising:
obtaining, by a charging trigger function network element, address information of a charging function network element based on information about the charging trigger function network element and/or location information of a terminal device; and
sending, by the charging trigger function network element, a charging request message to the charging function network element based on the address information, wherein the charging request message is for requesting the charging function network element to charge the terminal device.

14. The method according to claim 13, wherein the obtaining, by a charging trigger function network element, address information of a charging function network element based on information about the charging trigger function network element and/or location information of a terminal device comprises:
sending, by the charging trigger function network element, a query request message to a network repository function network element, wherein the query request message is for requesting to obtain address information of a candidate charging function network element configured to perform charging processing on the terminal device, and the query request message comprises the location information of the terminal device and/or the information about the charging trigger function network element; and
receiving, by the charging trigger function network element, the address information of the charging function network element from the repository function network element.

15. The method according to claim 13, wherein the obtaining, by a charging trigger function network element, address information of a charging function network element based on information about the charging trigger function network element and/or location information of a terminal device comprises:
determining, by the charging trigger function network element in local configuration information based on the location information of the terminal device and/or the information about the charging trigger function network element, the address information of the charging function network element corresponding to the location information of the terminal device and/or the information about the charging trigger function network element.

16. The method according to any one of claims 13 to 15, wherein the charging request message comprises address information of a dedicated charging function network element, and the dedicated charging function network element is a charging system that persistently stores user data of the UE.

17. A charging method, comprising:
sending, by a charging trigger function network element, a charging request message to a charging function network element, wherein the charging request message is for requesting to perform charging processing on a terminal device;
receiving, by the charging function network element, the charging request message from the charging trigger function network element; and
performing, by the charging function network element, charging processing on the terminal device based on charging data of the terminal device, wherein the charging data is received by the charging function network element from a dedicated charging function network element, and the dedicated charging function network element is a charging system that persistently stores user data of the terminal device.

18. The method according to claim 17, wherein before the performing, by the charging function network element, charging processing on the terminal device based on charging data of the terminal device, the method further comprises:
sending, by the charging function network element, a charging data request message to the dedicated charging function network element;
sending, by the dedicated charging function network element, the charging data to the charging function network element in response to the charging data request message; and
receiving, by the charging function network element, the charging data from the dedicated charging function network element.

19. The method according to claim 18, wherein the sending, by the charging function network element, a charging data request message to the dedicated charging function network element comprises:
sending, by the charging function network element, the charging data request message to the dedicated charging function network element when determining that there is no charging data in local storage.

20. The method according to claim 18 or 19, wherein the method further comprises:
obtaining, by the charging function network element, address information of the dedicated charging function network element; and
the sending, by the charging function network element, a charging data request message to the dedicated charging function network element comprises:
sending, by the charging function network element, the charging data request message to the dedicated charging function network element based on the address information.

21. The method according to claim 20, wherein the obtaining, by the charging function network element, address information of the dedicated charging function network element comprises:
sending, by the charging function network element, a query request message to a network repository function network element, wherein the query request message comprises an identifier of the terminal device, and the query request message is for requesting to query for the dedicated charging function network element corresponding to the terminal device;
determining, by the network repository function network element, the dedicated charging function network element based on the identifier of the terminal device;
sending, by the network repository function network element, the address information of the dedicated charging function network element to the charging function network element; and
receiving, by the charging function network element, the address information of the dedicated charging function network element from the network repository function network element.

22. The method according to claim 20, wherein the obtaining, by the charging function network element, address information of the dedicated charging function network element comprises:
obtaining, by the charging function network element, the address information of the dedicated charging function network element from the charging request message.

23. The method according to any one of claims 17 to 22, wherein after the performing, by the charging function network element, charging processing on the terminal device based on charging data of the terminal device, the method further comprises:
sending, by the charging function network element, a charging result to the dedicated charging function network element, wherein the charging result is data obtained by performing charging processing on the terminal device by the charging function network element; and
receiving, by the dedicated charging function network element, the charging result from the charging function network element.

24. The method according to any one of claims 17 to 23, wherein after the sending, by the dedicated charging function network element, the charging data of the terminal device to the charging function network element, the method further comprises:
receiving, by the dedicated charging function network element, a first charging result from another charging function network element, wherein the first charging result is data obtained by performing charging processing on the terminal device by the another charging function network element, and the another charging function network element is a network element that provides a charging service for the terminal device before the charging function network element;
determining, by the dedicated charging function network element based on the first charging result, whether the charging data of the terminal device needs to be updated to the charging function network element;
when the charging data of the terminal device needs to be updated to the charging function network element, sending, by the dedicated charging function network element, updated charging data to the charging function network element; and
receiving, by the charging function network element, the updated charging data from the dedicated function network element.

25. The method according to any one of claims 17 to 24, wherein the method further comprises:
recording, by the dedicated charging function network element, that the charging function network element is a network element that currently provides the charging service for the terminal device.

26. A communication apparatus, wherein the apparatus comprises a module configured to perform the method according to any one of claims 1 to 7, a module configured to perform the method according to any one of claims 8 to 12, or a module configured to perform the method according to any one of claims 13 to 16.

27. A communication apparatus, comprising:
a processor, configured to execute a computer program stored in a memory, to enable the apparatus to perform the method according to any one of claims 1 to 7, to enable the apparatus to perform the method according to any one of claims 8 to 12, or to enable the apparatus to perform the method according to any one of claims 13 to 16.

28. A computer program product, wherein the computer program product comprises instructions for performing the method according to any one of claims 1 to 7, the computer program product comprises instructions for performing the method according to any one of claims 8 to 12, or the computer program product comprises instructions for performing the method according to any one of claims 13 to 16.

29. A computer-readable storage medium, comprising: the computer-readable storage medium stores a computer program; and when the computer program is run on a computer, the computer is enabled to perform the method according to any one of claims 1 to 7, the computer is enabled to perform the method according to any one of claims 8 to 12, or the computer is enabled to perform the method according to any one of claims 13 to 16.

30. A communication system, comprising a charging function network element, a dedicated charging function network element, and a charging trigger function network element, wherein
the charging function network element is configured to perform the method according to any one of claims 1 to 7, the dedicated charging function is configured to perform the method according to any one of claims 8 to 12, and the charging trigger function network element is configured to perform the method according to any one of claims 13 to 16.
